# EUROPEAN PATENT SPECIFICATION

(11) **EP 3 955 038 B1**
(45) Date of publication and mention of the grant of the patent: **25.11.2026**
(21) Application number: 20812729.0
(22) Date of filing: 07.05.2020
(51) Int. Cl.: G02B 6/42

(54) **OPTICAL MODULE, CAGE COMPONENT, AND SINGLE BOARD INTERFACE SYSTEM**
OPTISCHES MODUL, KÄFIGBAUTEIL UND EINZELPLATTENSCHNITTSTELLENSYSTEM
MODULE OPTIQUE, COMPOSANT DE CAGE ET SYSTÈME D'INTERFACE À CARTE UNIQUE

(30) Priority: 31.05.2019 CN 201910468900
(43) Date of publication of application: 16.02.2022
(73) Proprietor: Huawei Technologies Co., Ltd., Shenzhen, Guangdong 518129 (CN)
(72) Inventor: ZHANG, Fakui, Shenzhen, Guangdong 518129 (CN); LI, Yuanmou, Shenzhen, Guangdong 518129 (CN); YIN, Tongguo, Shenzhen, Guangdong 518129 (CN)
(74) Representative: Gill Jennings & Every LLP
(86) International application number: PCT/CN2020/088973
(87) International publication number: WO 2020/238575

(56) References cited:
- CN-A- 1 947 046
- CN-A- 102 346 282
- CN-A- 108 121 035
- CN-A- 109 683 259
- CN-U- 201 576 116
- CN-U- 201 576 116
- CN-U- 204 882 961
- CN-U- 204 882 961
- CN-U- 204 882 961
- CN-U- 207 353 505
- JP-A- 2004 356 425
- US-A1- 2010 060 476
- US-A1- 2013 163 209
- US-A1- 2015 188 635
- US-B2- 7 621 773
- US-B2- 9 612 391

## Description

### TECHNICAL FIELD

This application relates to the field of optical communications technologies, and in particular, to an optical module, a cage assembly, and a board interface system.

### BACKGROUND

In recent years, with increasing popularity of optical fiber to the home and rapidly increasing demands of people for information, a quantity of optical fiber users is increasing year by year, challenging a capacity of an existing optical fiber system. In an optical communications system, a board interface system is disposed in an optical line terminal (optical line terminal, OLT), a plurality of optical modules are disposed in the board interface system, and a passive optical network (passive optical network, PON) port is disposed in each optical module. The PON port is connected, by using an optical distribution network (optical distribution network, ODN), to an optical network unit (optical network unit, ONU) disposed on a user side. An upper limit of a quantity of ONUs that each PON port accesses in an application is specific. For example, in a gigabit-capable passive optical network (gigabit-capable passive optical network, GPON) system, and a maximum split ratio of a PON port is 1:64, that is, a single GPON port accesses a maximum of 64 ONUs. As a quantity of uses increases, it is necessary to increase a quantity of PON ports disposed in an OLT.

In case of system expansion, a carrier needs to consider a plurality of aspects of requirements, including existing resource reuse, rapid deployment, and compatibility. A most direct method for expanding a PON system is increasing a quantity of PON ports in a board interface system. Therefore, the industry has been studying how to produce a higher-density PON OLT board interface system on the premise of reducing deployment costs.

CN 204 882 961 U discloses a dual-port multichannel light transceiver.

CN 201 576 116 U discloses an optical module comprising a PCB, a flexible circuit board and an indicator.

CN 109 683 259 A discloses an optical module unlocking structure with fiber plugging.

US 9 612 391 B2 discloses a connector assembly having a circuit board with a side edge; one or more light emitting devices connected to the side edge of the circuit; and a connector.

US 2010/060476 A1 discloses a device for indicating a device status includes a plurality of light guides including a first end for receiving light and a second end for displaying light, respectively.

US 7 621 773 B2 discloses a receptacle assembly that is coupled to a host system and configured to receive an electrical component.

US 2013/163209 A1 discloses a divider plate placed between columns of SFP ports that provides surface area adjacent to the SFP ports for affixing labeling.

US 2015/188635 A1 discloses a pluggable optical transceiver module for being plugged in a housing is provided. The housing has a cover and an elastic piece, and the cover has an accommodating space. One end of the elastic piece is connected to the cover while the other end has a first fastening portion.

CN 207 353 505 U discloses a hot swap type interface connector.

### SUMMARY

This application provides an optical module, a cage assembly, and a board interface system, to implement higher optical interface density.

According to a first aspect, an optical module is provided in accordance with appended claim 1.

In this embodiment of this application, the two SC-type optical interfaces are disposed in the optical module, so that higher optical interface density can be implemented in a board interface system, thereby improving space utilization.

With reference to the first aspect, a light guide channel is disposed in the optical module, the light guide channel penetrates through the optical module in a first direction, and the first direction is a direction of the electrical interface toward the SC-type optical interfaces.

This embodiment of this application proposes a solution in which the light guide channel is disposed in the optical module. The light guide channel penetrates through the optical module in the first direction, and is configured to transmit light of a light source, to indicate a registration status of the optical interface. In the solution, a region on a front end surface of the optical module is used to display the light guide channel, so that a region on a handle bar panel does not need to be occupied to dispose an indicator, thereby improving space utilization.

With reference to the first aspect, in a possible implementation, the light guide channel includes a light guide material.

With reference to the first aspect, in a possible implementation, the optical module includes a first step part and a second step part, the first step part includes the front end of the optical module, the second step part includes the rear end of the optical module, and a projection area of the first step part on the front end surface of the optical module is greater than a projection area of the second step part on the front end surface of the optical module.

In this embodiment of this application, because the SC optical interfaces have a relatively large size, the optical module may be of a "structure with a large head and a small tail". The second step part that is of the optical module and that is close to the electrical interface may be of a relatively small size, so that space can be reduced.

With reference to the first aspect, in a possible implementation, an unlocking apparatus is disposed on an outer side of a first side surface of the optical module, the unlocking apparatus is configured to unlock a connection between the optical module and a cage, and the first side surface is a left side surface or a right side surface of the optical module.

In this embodiment of this application, because the unlocking apparatus is disposed on only one side surface instead of two opposite side surfaces of the optical module, occupied space on a handle bar in a long side direction can also be reduced, to help implement a board interface system with high-density optical interfaces, thereby improving space utilization.

With reference to the first aspect, in a possible implementation, a hook is disposed on the first side surface of the optical module, and when the optical module is inserted into the cage, the hook is locked with a tongue on the cage.

With reference to the first aspect, in a possible implementation, the unlocking apparatus includes a handle assembly and a lever assembly, and when driving the optical module to move in the first direction, the handle assembly pushes a first end of the lever assembly to move in a direction close to the first side surface of the optical module, to enable a second end of the lever assembly to move in a direction away from the first side surface of the optical module, so that the second end of the lever assembly lifts the tongue of the cage to disengage the tongue of the cage from the hook.

With reference to the first aspect, in a possible implementation, the handle assembly includes a pull belt and a pressing part, the pull belt is connected to the pressing part, and the pressing part is configured to push the first end of the lever assembly to move in the direction close to the first side surface of the optical module.

With reference to the first aspect, in a possible implementation, the pressing part includes a hollow part, the first end of the lever assembly includes a protruded inclined surface, and when the pull belt is stationary, the hollow part of the pressing part is configured to accommodate the protruded inclined surface.

With reference to the first aspect, in a possible implementation, a spring groove parallel to the first direction is disposed on the first side surface of the optical module, a stroke spring is disposed in the spring groove, a first end of the stroke spring is connected to the handle assembly, a second end of the stroke spring is connected to the spring groove, and the stroke spring is configured to drive the handle assembly to move in a third direction opposite to the first direction, to reset the handle assembly.

With reference to the first aspect, in a possible implementation, a set spring is disposed between the first side surface of the optical module and the lever assembly, and the set spring is configured to drive the first end of the lever assembly to move in the direction away from the first side surface of the optical module, to reset the lever assembly.

According to a second aspect, a board interface system is provided in accordance with appended claim 11.

In this embodiment of this application, the two SC-type optical interfaces are disposed in the optical module, so that higher optical interface density can be implemented in a single board interface system. In addition, higher-density optical interfaces are implemented in limited handle bar space, thereby improving space utilization.

With reference to the second aspect, in a possible implementation, the two SC-type optical interfaces are arranged in a short side direction of the handle bar.

With reference to the second aspect, in a possible implementation, the two SC-type optical interfaces are arranged in the long side direction of the handle bar.

With reference to the second aspect, a light guide channel is disposed in each optical module, the light guide channel penetrates through the optical module in a first direction, and the first direction is a direction of the electrical interface toward the SC-type optical interfaces.

This embodiment of this application proposes a solution in which the light guide channel is disposed in the optical module. The light guide channel penetrates through the optical module in the first direction, and is configured to transmit light of a light source disposed on a board, to indicate a registration status of the optical interface. In the solution, a region on a front end surface of the optical module is used to display the light guide channel, so that a region on a handle bar panel does not need to be occupied to dispose an indicator, thereby improving space utilization.

With reference to the second aspect, in a possible implementation, the light guide channel includes a light guide material.

In this embodiment of this application, the light guide material may be disposed in the light guide channel, and the light guide material may be used to transmit light, to improve light transmission performance of the light guide channel.

With reference to the second aspect, in a possible implementation, the board interface system further includes the board, the light source is disposed on the board, and light emitted by the light source passes through the light guide channel in the first direction.

With reference to the second aspect, in a possible implementation, the optical module includes a first step part and a second step part, the first step part includes the front end of the optical module, the second step part includes the rear end of the optical module, and a projection area of the first step part on the front end surface of the optical module is greater than a projection area of the second step part on the front end surface of the optical module.

In this embodiment of this application, because the SC optical interfaces have a relatively large size, the optical module may be of a "structure with a large head and a small tail". The second step part that is of the optical module and that is close to the electrical interface may be of a relatively small size, so that space can be reduced.

With reference to the second aspect, in a possible implementation, a plurality of cages are disposed on the handle bar in the long side direction, and the plurality of cages are configured to respectively place the plurality of optical modules.

With reference to the second aspect, in a possible implementation, an unlocking apparatus is disposed on an outer side of a first side surface of the optical module, the unlocking apparatus is configured to unlock a connection between the optical module and the cage, and the first side surface is a left side surface or a right side surface of the optical module.

In this embodiment of this application, because the unlocking apparatus is disposed on only one side surface instead of two opposite side surfaces of the optical module, occupied space on the handle bar in the long side direction can also be reduced, to help implement a board interface system with high-density optical interfaces, thereby improving space utilization.

With reference to the second aspect, in a possible implementation, a hook is disposed on the first side surface of the optical module, a tongue is disposed on the cage, and when the optical module is inserted into the cage, the hook is locked with the tongue.

With reference to the second aspect, in a possible implementation, the unlocking apparatus includes a handle assembly and a lever assembly, and when driving the optical module to move in the first direction, the handle assembly pushes a first end of the lever assembly to move in a direction close to the first side surface of the optical module, to enable a second end of the lever assembly to move in a direction away from the first side surface of the optical module, so that the second end of the lever assembly lifts the tongue of the cage to disengage the tongue of the cage from the hook.

With reference to the second aspect, in a possible implementation, the handle assembly includes a pull belt and a pressing part, the pull belt is connected to the pressing part, and the pressing part is configured to push the first end of the lever assembly to move in the direction close to the first side surface of the optical module.

With reference to the second aspect, in a possible implementation, the pressing part includes a hollow part, the first end of the lever assembly includes a protruded inclined surface, and when the pull belt is stationary, the hollow part of the pressing part is configured to accommodate the protruded inclined surface.

With reference to the second aspect, in a possible implementation, a spring groove parallel to the first direction is disposed on the first side surface of the optical module, a stroke spring is disposed in the spring groove, a first end of the stroke spring is connected to the handle assembly, a second end of the stroke spring is connected to the spring groove, and the stroke spring is configured to drive the handle assembly to move in a third direction opposite to the first direction, to reset the handle assembly.

With reference to the second aspect, in a possible implementation, a set spring is disposed between the first side surface of the optical module and the lever assembly, and the set spring is configured to drive the first end of the lever assembly to move in the direction away from the first side surface of the optical module, to reset the lever assembly.

With reference to the second aspect, in a possible implementation, the system further includes a buckle, a hollow heat dissipation port is disposed on a top wall of the cage, and the buckle is configured to be buckled to the heat dissipation port; a first buckling point is disposed on the top wall of the cage, two second buckling points are disposed on two side walls of the cage, the first buckling point is close to a front end opening of the cage, and the two second buckling points are close to a rear wall of the cage; and a first buckling part is disposed at a first end of the buckle, two second buckling parts are disposed at a second end of the buckle, the first buckling part is buckled to the first buckling point, and the two second buckling parts are buckled to the two second buckling points.

In a cage assembly provided in this embodiment of this application, the first buckling point is disposed on the top wall of the cage, and the second buckling points are disposed on the two side walls of the cage, to increase a buckling span when the buckle is buckled to the cage, so that a heat sink attached to the heat dissipation port is evenly stressed, to prevent the heat sink from being tilted. In addition, because the first buckling point close to the front end opening of the cage is disposed on the top wall of the cage, the buckle can be prevented from interfering with the handle bar.

With reference to the second aspect, in a possible implementation, two first buckling points are disposed on the top wall of the cage, and one or two first buckling parts are disposed on the first end of the buckle.

With reference to the second aspect, in a possible implementation, the system further includes the heat sink, and the buckle is configured to fasten the heat sink to the heat dissipation port.

With reference to the second aspect, in a possible implementation, the two SC-type optical interfaces are sequentially arranged in a short side of the handle bar on the front end surface of the optical module.

In this embodiment of this application, a little space on the short side of the handle bar is used to double a quantity of SC-type optical interfaces, to implement higher optical interface density and improve space utilization.

### BRIEF DESCRIPTION OF DRAWINGS

FIG. 1 is a schematic diagram of an application environment of a board interface system according to an embodiment of this application;
FIG. 2 is a schematic change diagram of optical interface density of a board interface system according to an embodiment of this application;
FIG. 3 is a schematic diagram of an application environment of a board interface system according to another embodiment of this application;
FIG. 4 is a schematic diagram of a position relationship between a cabinet door and a handle bar panel according to an embodiment of this application;
FIG. 5 is a schematic diagram of a position relationship between a cabinet door and a handle bar panel according to another embodiment of this application;
FIG. 6 is an exploded form view of a board interface system according to an embodiment of this application;
FIG. 7 is an installation effect diagram of a board interface system according to an embodiment of this application;
FIG. 8 is a schematic diagram of a combination of a board and a handle bar according to an embodiment of this application;
FIG. 9 is a front view of a handle bar according to an embodiment of this application;
FIG. 10(a) and FIG. 10(b) each are a schematic three-dimensional diagram of an optical module according to an embodiment of this application;
FIG. 11 is a schematic three-dimensional diagram of an optical module according to another embodiment of this application;
FIG. 12 is a schematic three-dimensional diagram of an optical module according to another embodiment of this application;
FIG. 13 is a schematic three-dimensional diagram of an optical module according to another embodiment of this application;
FIG. 14 is a front view of an optical module according to an embodiment of this application;
FIG. 15(a) to FIG. 15(d) each are a front view of an optical module according to another embodiment of this application;
FIG. 16(a) to FIG. 16(d) each are a front view of an optical module according to another embodiment of this application;
FIG. 17(a) and FIG. 17(b) each are a right view of an optical module according to an embodiment of this application;
FIG. 18(a) to FIG. 18(c) each are a rear view of an optical module according to an embodiment of this application;
FIG. 19 is a schematic structural diagram of an SC-type optical fiber connector according to an embodiment of this application;
FIG. 20 is a schematic partial view of a handle bar according to an embodiment of this application;
FIG. 21(a) and FIG. 21(b) each are a right view of an optical module that includes a light guide channel according to an embodiment of this application;
FIG. 22 is a front view of an optical module that includes a light guide channel according to an embodiment of this application;
FIG. 23 is a schematic three-dimensional cross-sectional diagram of a board interface system according to an embodiment of this application;
FIG. 24 is a top view of the board interface system shown in FIG. 23;
FIG. 25(a) to FIG. 25(c) each are a schematic structural diagram of a cage and an optical module that includes an unlocking apparatus according to an embodiment of this application;
FIG. 26 is a cutaway diagram of an optical module that includes an unlocking apparatus according to an embodiment of this application;
FIG. 27 is a schematic exploded view of an optical module that includes an unlocking apparatus according to an embodiment of this application;
FIG. 28 is a schematic front exploded view of an optical module that includes an unlocking apparatus according to an embodiment of this application;
FIG. 29 is a schematic diagram of a lever assembly according to an embodiment of this application;
FIG. 30 is an interference diagram of a cage and a handle bar according to an embodiment of this application;
FIG. 31 is a schematic diagram in which a cage and a buckle are in a separated state according to an embodiment of this application;
FIG. 32 is a schematic diagram in which a cage and a buckle are in a separated state according to another embodiment of this application;
FIG. 33 is a schematic diagram in which a cage is buckled to one end of a buckle according to an embodiment of this application; and
FIG. 34 is a schematic diagram in which a cage and a buckle are in a buckled state according to an embodiment of this application.

### DESCRIPTION OF EMBODIMENTS

The following describes technical solutions of this application with reference to the accompanying drawings.

First, directions of a reference coordinate system of the accompanying drawings in the embodiments of this application are described. An X-axis, a Y-axis, and a Z-axis are perpendicular to each other, and an XY plane is parallel to a handle bar panel 102 of a board interface system 100. The X-axis is parallel to a long side of a handle bar 110, and the Y-axis is parallel to a short side of the handle bar 110.

A first direction A and a second direction B are perpendicular to the Y-axis, and the first direction A is a direction of an electrical interface of an optical module 300 toward SC-type optical interfaces 311. The second direction B is perpendicular to the first direction A, and is parallel to a front end surface 301 of the optical module 300.

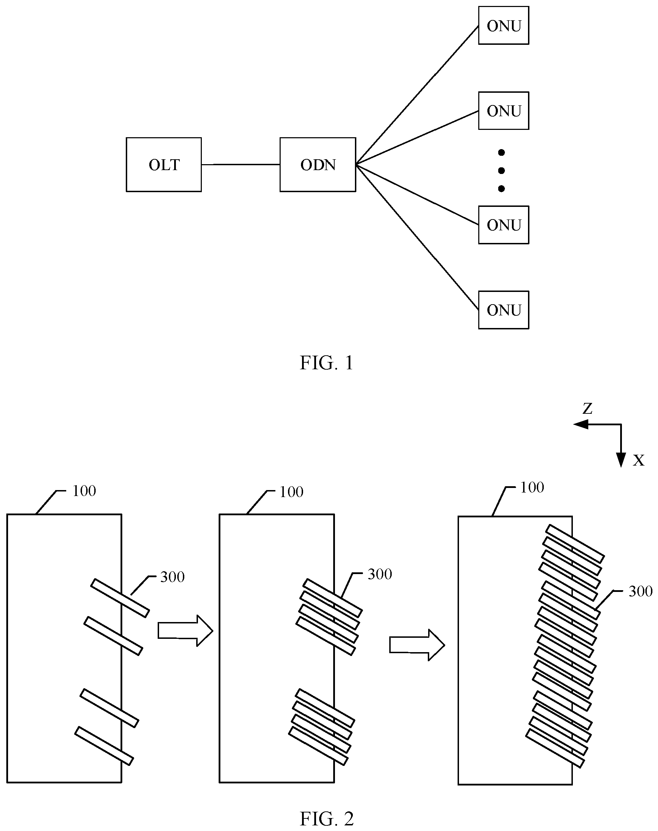

FIG. 1 is a schematic diagram of a possible application environment according to an embodiment of this application. As shown in FIG. 1, an optical communications system includes an optical line terminal (optical line terminal, OLT), and the OLT is connected, by using an optical distribution network (optical distribution network, ODN), to a plurality of optical network units (optical network unit, ONU) disposed on a user side. The OLT includes one or more board interface systems, a plurality of optical modules may be disposed in each board interface system, and the optical module is configured to perform electro-optical conversion. The optical module may convert an electrical signal into an optical signal, or convert an optical signal into an electrical signal. An optical interface and an electrical interface are disposed in the optical module, and each optical interface may be connected to a specific quantity of ONUs to transmit a signal. The optical interface includes a passive optical network (passive optical network, PON) port. According to different transmission rates, a PON may include a gigabit-capable passive optical network (gigabit-capable passive optical network, GPON), a 10 gigabit-capable passive optical network (10 gigabit-capable passive optical network, XGPON), a 10 gigabit-capable symmetric passive optical network (10 gigabit-capable symmetric passive optical network, XGS-PON), or the like. Correspondingly, a PON port in a different network may also be referred to as a GPON port, an XGPON port, or an XGS-PON port.

Because an upper limit of a quantity of ONUs that each optical interface accesses is specific, a quantity of users that one board interface system 100 can support is also limited. If the OLT is required to support more users (ONUs), a higher-density board interface system is required or one board interface system is required to accommodate more optical interfaces.

FIG. 2 is a schematic change diagram of optical interface density of a board interface system according to an embodiment of this application. As shown in FIG. 2, as a quantity of users (ONUs) increases, optical interface density of a board interface system 100 is becoming higher from initial four optical interfaces to eight optical interfaces and then to 16 optical interfaces. It is foreseeable that the board interface system is to accommodate more optical interfaces in a future development trend. However, to reduce costs, it is hoped that as few changes as possible are made to other deployment configurations in a conventional technology when the board interface system is improved. In other words, an external size of the board interface system is not changed when the optical interface density of the board interface system is increased, so that an existing deployment does not need to be changed.

To resolve the foregoing technical problem, the embodiments of this application provide an optical module, a board interface system, and a cage assembly. The cage assembly includes a cage and a buckle, and the cage is configured to accommodate an optical module. The optical module, the board interface system, and the cage assembly provided in the embodiments of this application can implement higher optical interface density and improve space utilization.

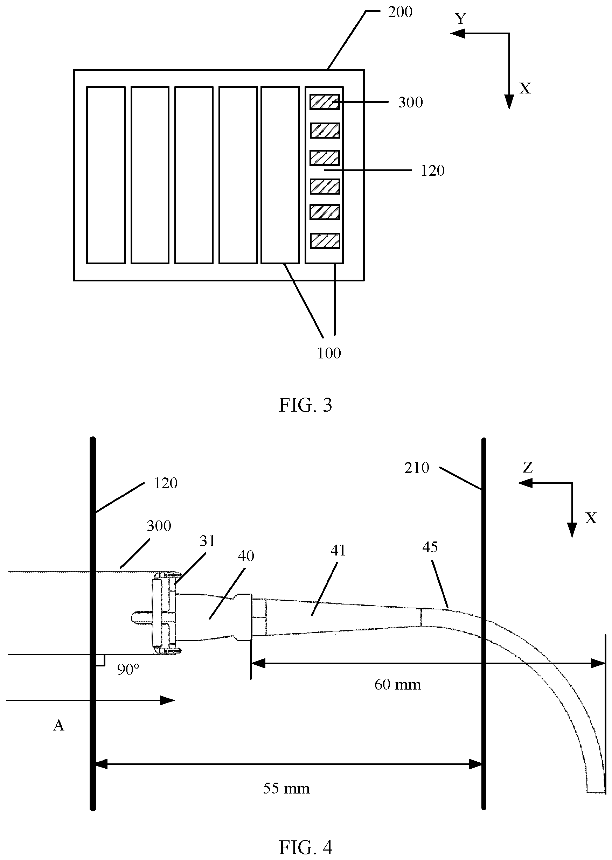

FIG. 3 is a schematic diagram of an application environment of a board interface system according to another embodiment of this application. As shown in FIG. 3, a board interface system 100 is usually installed in a cabinet 200, and the cabinet 200 can be installed in an equipment room of a carrier. One or more board interface systems 100 may be disposed in one cabinet 200. A specific quantity of optical modules 300 can be disposed in each board interface system 100. Optionally, one or more guide troughs may be disposed in the cabinet 200, and each board interface system 100 is inserted into the cabinet 200 by using the guide trough. Each board interface system 100 includes a handle bar and a board, and the board and the handle bar are fastened together to be inserted into the guide trough of the cabinet 200. The handle bar is configured to fasten and insert/remove the board. The board includes a printed circuit board (printed circuit board, PCB). An electronic device and/or element may be disposed on the PCB.

The handle bar includes a handle bar panel 120, and the handle bar panel 120 may be configured to install an external interface and an indicator. For example, the external interface may be an optical interface of the optical module 300. Optionally, the handle bar is a frame-type structure.

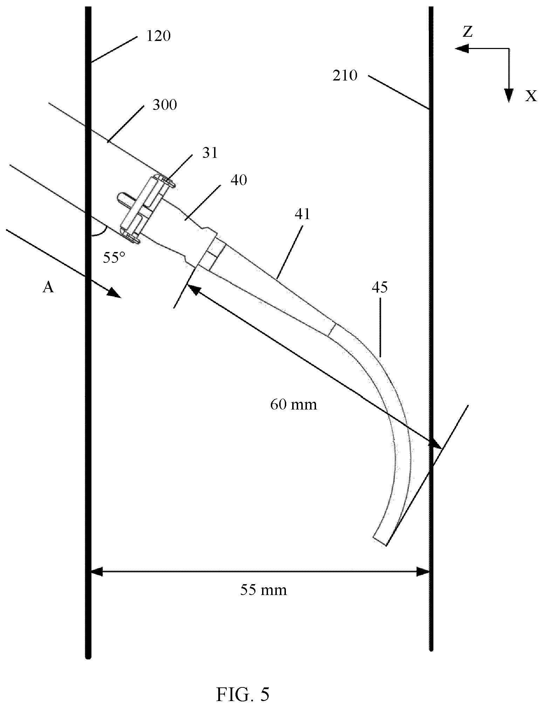

FIG. 4 and FIG. 5 each are a schematic diagram of a position relationship between a cabinet door 210 and a handle bar panel 120. As shown in the figures, an optical module 300 is disposed on the handle bar panel 120, and an optical interface 31 is disposed in the optical module 300. An optical fiber 45 is plug-connected to the optical interface 31 by using an optical fiber connector 40. For ease of display, only one optical module 300 is displayed in each of FIG. 4 and FIG. 5. In an actual application, one board interface system 100 may include a plurality of optical modules 300.

As shown in FIG. 4, in an existing deployment, a relative distance between the cabinet door 210 and the handle bar panel 120 is fixed. The fixed relative distance may cause a problem that the optical fiber 45 abuts against the cabinet door 210. For example, fiber outlet space between the cabinet door 210 and the handle bar panel 120 is 55 mm. In consideration of a bending radius of the optical fiber 45 and a length of a sleeve 41, a length of a pigtail part reaches 60 mm. If the optical interface 31 of the optical module 300 is 90° straight out, the problem that the optical fiber 45 abuts against the cabinet door 210 is inevitably caused, to cause optical link attenuation and optical fiber damage. Therefore, as shown in FIG. 5, to avoid the foregoing problem, there is a light outlet angle between a light outlet direction of the optical interface 31 and the handle bar panel 120, so that the optical fiber 45 can be prevented from abutting against the cabinet door 210, to improve optical link transmission quality. In FIG. 5, the light outlet angle may be about 55°. A person skilled in the art may understand that a value of the light outlet angle is not limited in this embodiment of this application, provided that the value of the light outlet angle can prevent optical fiber performance from deteriorating because the optical fiber abuts against the cabinet door.

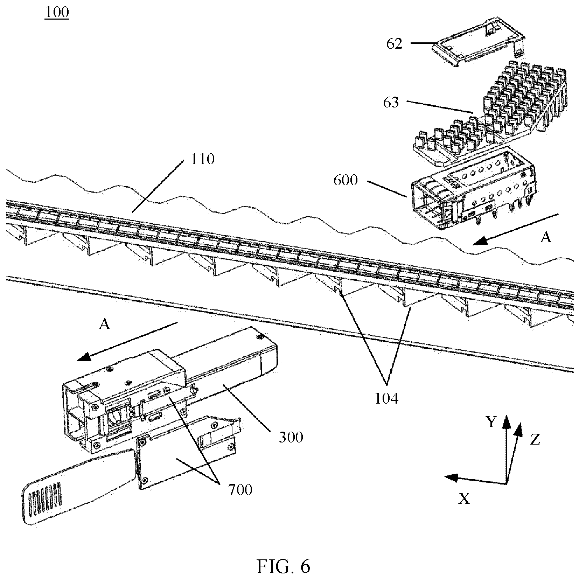

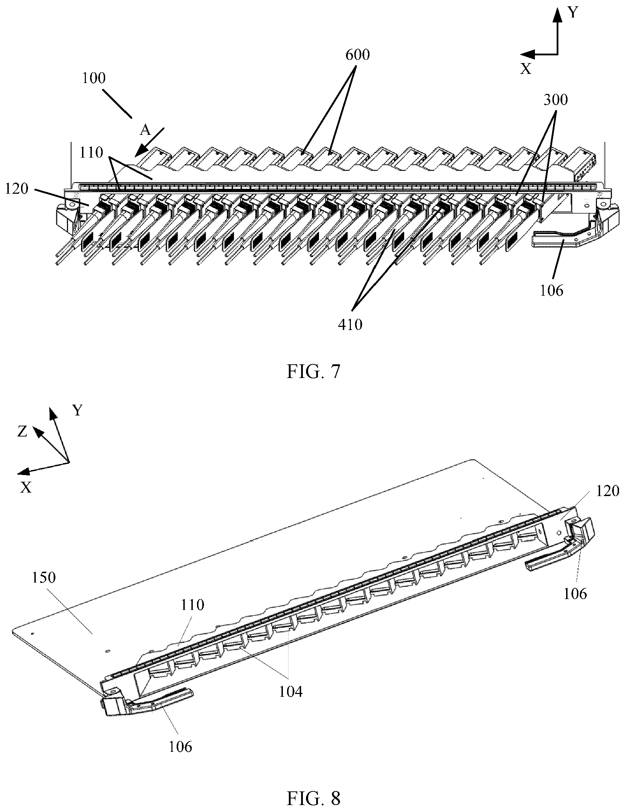

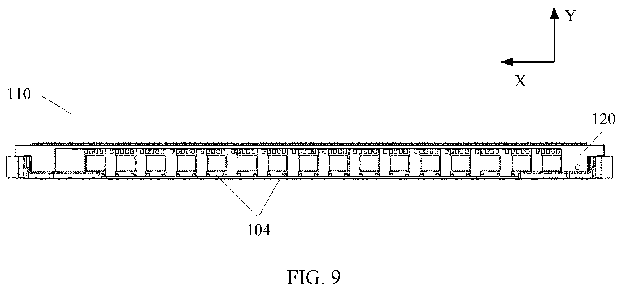

FIG. 6 is an exploded form view of a board interface system 100 according to an embodiment of this application. FIG. 7 is an installation effect diagram of a board interface system 100 according to an embodiment of this application. FIG. 8 is a schematic diagram of a combination of a board and a handle bar according to an embodiment of this application. FIG. 9 is a front view of a handle bar according to an embodiment of this application. FIG. 6 is a schematic diagram in which the board interface system 100 is not plug-connected to an optical fiber connector 410. FIG. 7 is a schematic diagram in which the board interface system 100 is plug-connected to an optical fiber connector 410.

Referring to FIG. 6 to FIG. 9, a board interface system 100 in an embodiment of this application includes a handle bar 110, a board 150, an optical module 300, and a cage assembly. The cage assembly includes a cage 600, a buckle 62, and a heat sink 63.

The handle bar 110 includes a handle bar panel 120, and the handle bar panel 120 is substantially rectangular and includes a long side (an X-axis direction) and a short side (a Y-axis direction). A plurality of optical modules 300 are disposed on the handle bar 110 in a long side direction (namely, the X-axis direction). Specifically, a plurality of openings 104 are disposed on the handle bar 110 in the long side direction (namely, the X-axis direction), a plurality of cages 600 are respectively disposed at the openings 104 of the handle bar 110, and the plurality of cages 600 are respectively configured to install the plurality of optical modules 300. Optionally, the plurality of openings 104 may be all configured to place optical modules 300, or optical modules 300 may be placed in some of the openings 104.

Optionally, the handle bar 110 may be of a frame-like structure. Handles 106 may be disposed on two sides of the long side direction of the handle bar 110, and the handles 106 are configured to push/pull the handle bar 110 and the board 150 that are fastened together.

Optionally, the optical module 300 further includes an unlocking apparatus 700, and the unlocking apparatus 700 is configured to unlock a connection between the optical module 300 and the cage 600.

Optionally, the board 150 includes a PCB, and an electronic device, a circuit module, a power supply, a socket, or the like may be disposed on the PCB. For ease of display, the board 150 in FIG. 8 includes only the PCB, and an apparatus, such as an electronic device, disposed on the PCB is not shown.

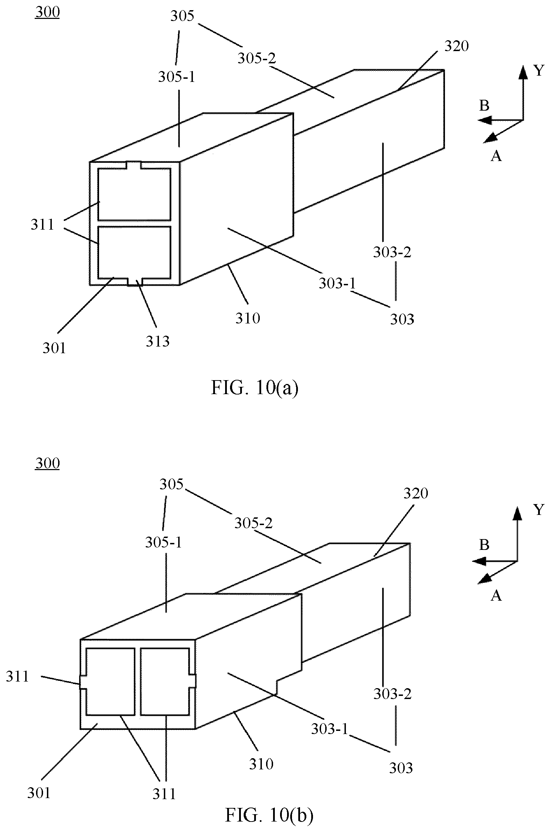

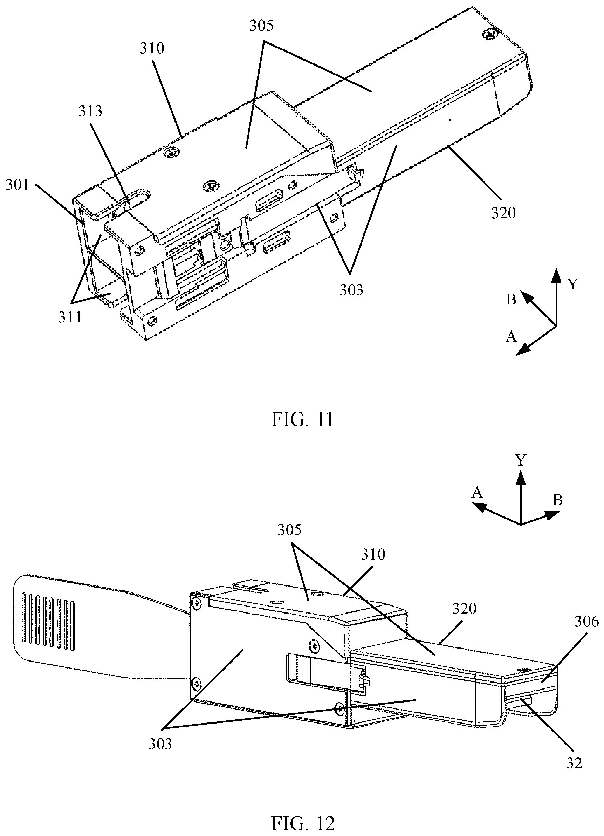

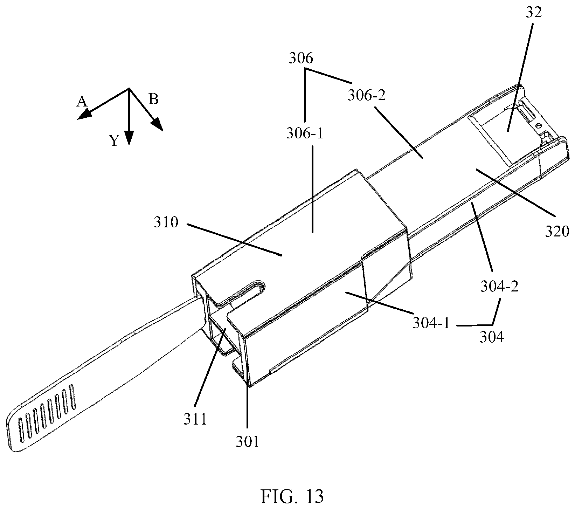

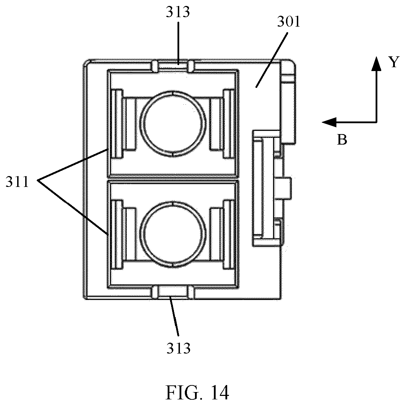

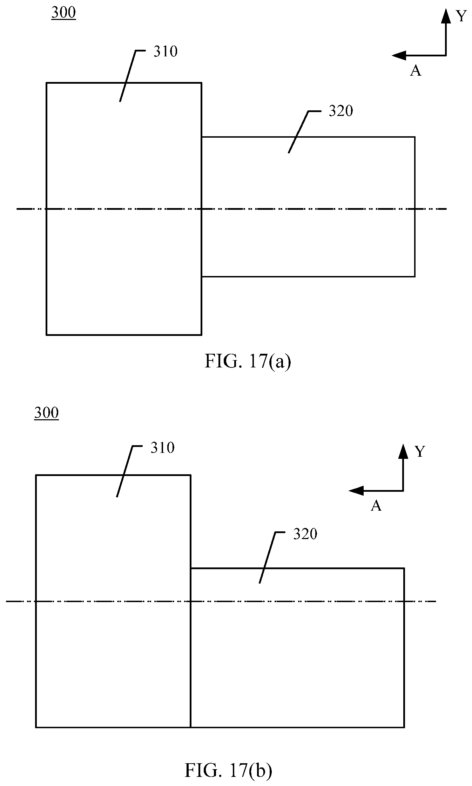

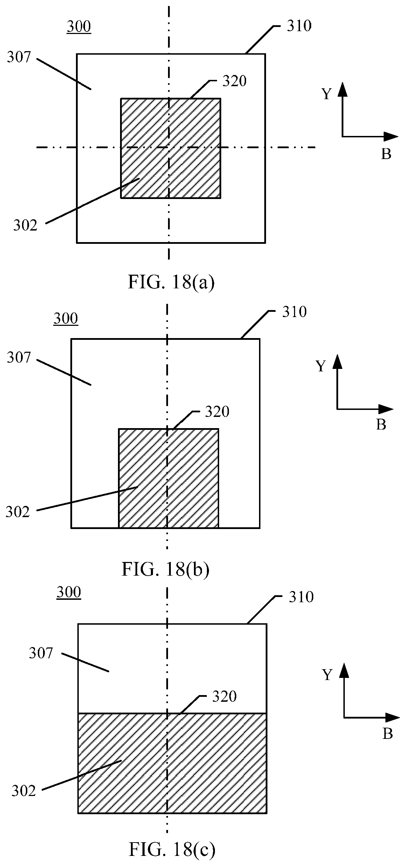

FIG. 10(a) and FIG. 10(b) to FIG. 18(a) to FIG. 18(c) each are a schematic diagram of an optical module from a different visual angle according to an embodiment of this application. FIG. 10(a), FIG. 10(b), and FIG. 11 each are a schematic three-dimensional diagram from a visual angle at a front surface of an optical module. FIG. 12 is a schematic three-dimensional diagram from a visual angle at a rear end of an optical module. FIG. 13 is a schematic three-dimensional diagram obtained after an optical module is inverted from a bottom surface. FIG. 14 to FIG. 16(a) to FIG. 16(d) each are a front view of an optical module 300 according to an embodiment of this application. FIG. 17(a) and FIG. 17(b) each are a right view of an optical module 300 according to an embodiment of this application. FIG. 18(a) to FIG. 18(c) each are a rear view of an optical module 300 according to an embodiment of this application.

As shown in FIG. 10(a) and FIG. 10(b) to FIG. 18(a) to FIG. 18(c), each optical module 300 includes a front end surface 301, a rear end surface 302, a right side surface 303, a left side surface 304, a top surface 305, and a bottom surface 306. A first direction A, a second direction B, and a Y-axis are perpendicular to each other, and a BY plane is parallel to the front end surface 301 and the rear end surface 302 of the optical module 300. An AY plane is parallel to the right side surface 303 and the left side surface 304 of the optical module 300. An AB plane is parallel to the top surface 305 and the bottom surface 306 of the optical module 300. A part that is of the optical module 300 and that is close to the front end surface 301 is referred to as a front end of the optical module, and a part that is of the optical module 300 and that is close to the rear end surface 302 is referred to as a rear end of the optical module.

Two optical interfaces are disposed at a front end of each optical module 300, and the optical interfaces are square connector (square connector, SC)-type optical interfaces 311. An electrical interface 32 is disposed at a rear end of each optical module 300. The SC-type optical interface 311 is configured to be plug-connected to an SC-type optical fiber connector. The optical module 300 is connected to a board 150 by using the electrical interface 32. Optionally, a type of the electrical interface 32 is not limited in this embodiment of this application. For example, the electrical interface 32 may be a small form-factor pluggable (small form-factor pluggable, SFP) interface. The electrical interface 32 may be a row of edge connector structures disposed on the rear end of the optical module 300.

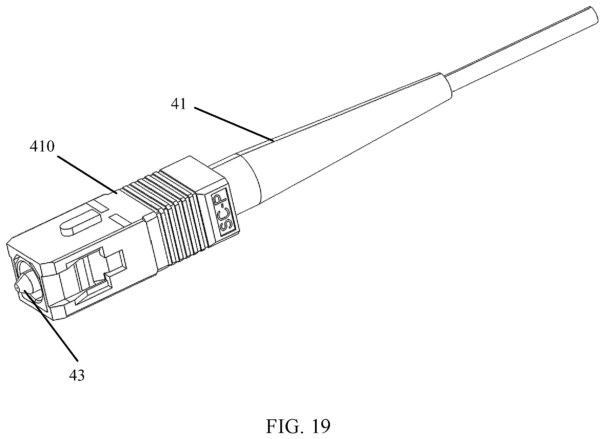

FIG. 19 is a schematic structural diagram of an SC-type optical fiber connector according to an embodiment of this application. As shown in FIG. 19, a housing of an SC-type optical fiber connector 410 is rectangular, a structure in which a needle 43 is coupled to a sleeve 41 is used, and a push-pull latching mechanism is used, so that rotation is not needed. The SC-type optical fiber connector 410 is characterized by a convenient insertion/removal operation and small insertion loss fluctuation. The SC-type optical fiber connector is one of standard size connectors in the industry, and is usually used in access network networking. The SC-type optical interface has a larger size and occupies more space than another type of optical interface, such as a lucent connector (lucent connector, LC)-type optical interface. However, because the SC-type optical interface is usually used in access network networking, the SC-type optical fiber connector is used for both an OLT and an ODN in an existing network. Therefore, the SC-type optical interface is used in the optical module in a board interface system 100, so that a transition jumper can be prevented from being added in networking, to reduce deployment complexity.

In this embodiment of this application, the two SC-type optical interfaces are disposed in each optical module 300, so that higher optical interface density can be implemented in a single board interface system 100. In addition, higher-density optical interfaces are implemented in limited handle bar space, thereby improving space utilization.

As shown in FIG. 10(a), the two SC-type optical interfaces 311 are sequentially arranged in a Y-axis direction. Alternatively, as shown in FIG. 10(b), the two SC-type optical interfaces 311 may be sequentially arranged in the second direction B.

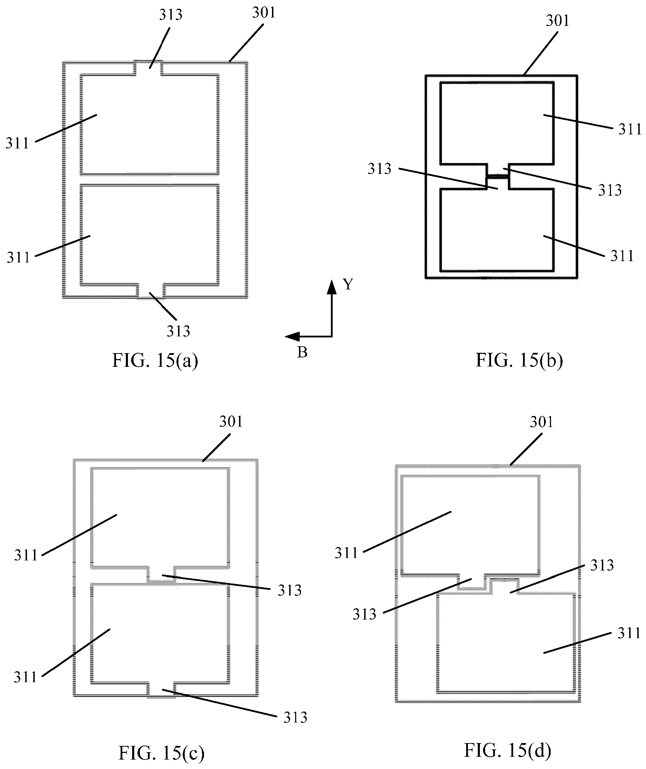

Two reverse pins 313 are further disposed on the front end surface 301 of the optical module 300. The reverse pin 313 is configured to fit with the optical fiber connector to insert the optical fiber connector into the optical module. The two reverse pins 313 have a plurality of arrangement manners. FIG. 15(a) to FIG. 15(d) each are a front view corresponding to the optical module 300 in FIG. 10(a). As shown in FIG. 15(a), the two reverse pins 313 may be arranged in opposite directions. As shown in FIG. 15(b), the two reverse pins 313 may be arranged toward each other. As shown in FIG. 15(c), the two reverse pins 313 may be arranged in a same direction. As shown in FIG. 15(d), the two reverse pins 313 may be arranged toward each other in a staggered manner. In the arrangement manner in FIG. 15(d), space of the optical module 300 in the Y-axis can be reduced.

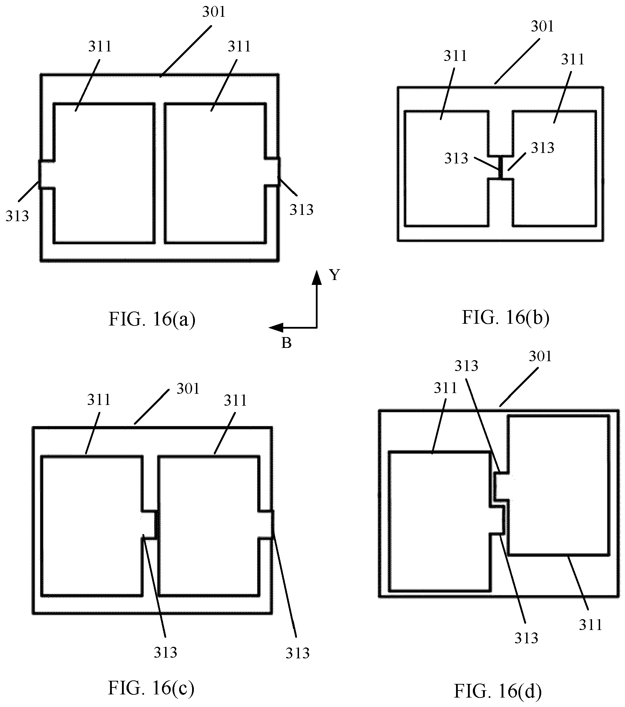

FIG. 16(a) to FIG. 16(d) each are a front view corresponding to the optical module 300 in FIG. 10(b). As shown in FIG. 16(a), the two reverse pins 313 may be arranged in opposite directions. As shown in FIG. 16(b), the two reverse pins 313 may be arranged toward each other. As shown in FIG. 16(c), the two reverse pins 313 may be arranged in a same direction. As shown in FIG. 16(d), the two reverse pins 313 may be arranged toward each other in a staggered manner. In the arrangement manner in FIG. 16(d), space of the optical module 300 in an X-axis can be reduced.

A person skilled in the art can understand that an arrangement manner of the two reverse pins 313 in the optical module 300 is not limited to the manners listed in FIG. 15(a) to FIG. 15(d) and FIG. 16(a) to FIG. 16(d), and may be another arrangement manner or a variation. Other arrangement manners or variations are not listed one by one in this application.

For ease of description, in the following embodiments, a case in which two SC-type optical interfaces 311 are sequentially arranged in a Y-axis direction is used for description. However, subsequent implementations are also applicable to a case in which two SC-type optical interfaces 311 are sequentially arranged in a second direction B.

In an embodiment of this application, the optical module 300 shown in FIG. 10(a) may be disposed on a handle bar panel 120, and two SC optical interfaces are arranged on the optical module 300 in a short side direction (namely, a Y-axis direction) of the handle bar panel 120. As shown in FIG. 7, FIG. 8, and FIG. 9, a size of the handle bar panel 120 limits a quantity of optical modules that can be disposed and a quantity of ports that can be disposed. In this application, a little space on a short side of the handle bar panel 120 is used to double a quantity of SC-type optical interfaces, to implement higher optical interface density and improve space utilization.

In a specific example, a length of a handle bar 110 in a long side direction is 15 inches (inch) (namely, 38.1 cm), and a length of the handle bar 110 in a short side direction is 0.9 inches (namely, 2.286 cm). 16 optical modules and a total of 32 SC-type optical interfaces may be disposed in the handle bar 110. It should be noted that a size of the handle bar 110 is not limited in this embodiment of this application, provided that the optical module in this embodiment of this application can be installed in the handle bar 110.

Optionally, as shown in FIG. 10(a) and FIG. 10(b) to FIG. 13, FIG. 17(a), FIG. 17(b), and FIG. 18(a) to FIG. 18(c), an optical module 300 may include a first step part 310 and a second step part 320, the first step part 310 includes a front end surface 301, the second step part 320 includes a rear end surface 302, and a projection area of the first step part 310 on the front end surface 301 is greater than a projection area of the second step part 320 on the front end surface 301. The first step part 310 includes two SC optical interfaces 311. The second step part 320 includes an electrical interface 32. Because the SC optical interfaces 311 have a relatively large size, the optical module 300 may be of a "structure with a large head and a small tail". A part that is of the optical module 300 and that is close to the electrical interface 32 may be of a relatively small size, so that space can be reduced.

Optionally, a right side surface 303 of the optical module 300 includes a right side surface 303-1 of the first step part 310 and a right side surface 303-2 of the second step part 320. A left side surface 304 of the optical module 300 includes a left side surface 304-1 of the first step part 310 and a left side surface 304-2 of the second step part 320. A top surface 305 of the optical module 300 includes a top surface 305-1 of the first step part 310 and a top surface 305-2 of the second step part 305. A bottom surface 306 of the optical module 300 includes a bottom surface 306-1 of the first step part 310 and a bottom surface 306-2 of the second step part 320. The front end surface of the first step part 310 is a front end surface 301 of the optical module, and the rear end surface of the second step part 320 is a rear end surface 302 of the optical module. The first step part 310 further includes a rear end surface 307. The right side surface 303 or the left side surface 304 of the optical module 300 is defined relative to a position at which the optical module 300 is installed in a handle bar 110. For example, a plurality of optical modules 300 are sequentially arranged in a long side direction of the handle bar 110, and the right side surface 303 or the left side surface 304 of the optical module 300 is adjacent to another optical module 300. The top surface 305 or the bottom surface 306 of the optical module 300 is adjacent to the handle bar 110.

A combination manner of the first step part 310 and the second step part 320 is not limited in this embodiment of this application, provided that the projection area of the first step part 310 on the front end surface 301 is greater than the projection area of the second step part 320 on the front end surface 301. FIG. 17(a) and FIG. 17(b) each are a right view of an optical module 300 according to an embodiment of this application. As shown in FIG. 17(a), a first step part 310 and a second step part 320 may be axially symmetrically distributed on a YA plane. Alternatively, as shown in FIG. 17(b), a first step part 310 and a second step part 320 may be asymmetrically distributed on a YA plane.

For another example, FIG. 18(a) to FIG. 18(c) each are a rear view of an optical module 300 according to still another embodiment of this application, that is, FIG. 18(a) to FIG. 18(c) each are a schematic two-dimensional diagram of the optical module 300 on a YB plane. As shown in FIG. 18(a), a first step part 310 and a second step part 320 are substantially centrally symmetrically distributed on the YB plane. Alternatively, as shown in FIG. 18(b) and FIG. 18(c), a first step part 310 and a second step part 320 are axially symmetrically distributed on the YB plane. Alternatively, the first step part 310 and the second step part 320 may be combined in another manner on the YB plane. This is not limited in this embodiment of this application.

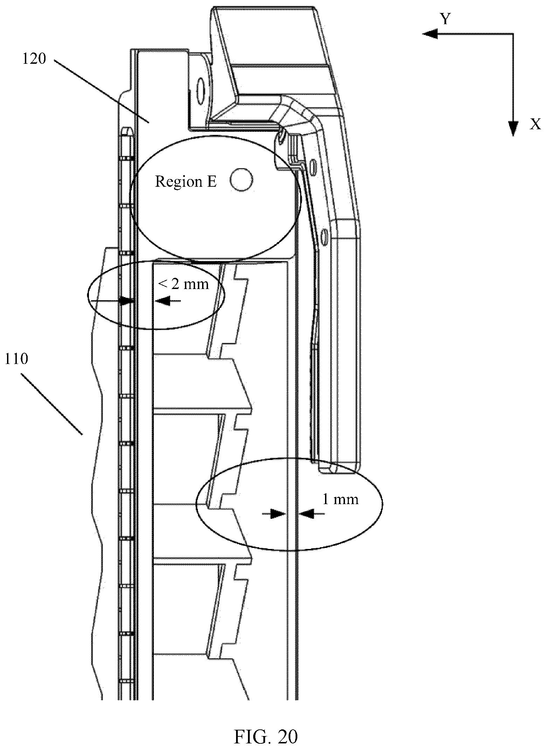

Usually, a handle bar panel 120 may be further configured to dispose an indicator. The indicator is used to indicate a registration status of an SC-type optical interface, or other status information. Each indicator corresponds to one SC-type optical interface. FIG. 20 is a schematic partial view of a handle bar according to an embodiment of this application. As shown in FIG. 20, indicators are usually disposed on two sides of a long side (in an X-axis direction) of the handle bar panel 120, or disposed in a light panel region E of the handle bar panel 120. However, because two SC-type optical interfaces 311 are disposed in an optical module 300 in this embodiment of this application and occupy most of an area of the handle bar panel 120, a remaining area of the handle bar panel 120 is reduced. In addition, a quantity of needed indicators is also doubled due to added SC-type optical interfaces 311. Therefore, a remaining area of the handle bar panel 120 is insufficient to dispose indicators. As shown in FIG. 20, a currently common handle bar size is used as an example. After an area occupied by optical modules 300 is removed, widths of the two sides of the handle bar panel 120 are both less than 2 mm. It can be learned that space on the two sides of the handle bar panel 120 is insufficient to dispose indicators. An area of the light panel region E is about 15 mm × 10 mm. Because a quantity of optical interfaces increases, space of the light panel region E also cannot accommodate more indicators.

In view of the foregoing problem, an embodiment of this application proposes a solution used for an indicator in an optical module. In this solution, it is proposed to dispose a light guide channel on the optical module. The light guide channel penetrates through the optical module in a first direction A and is configured to transmit light of a light source disposed on a board, to indicate a registration status of an optical interface. In the solution, a region on a front end surface of the optical module is used to display the light guide channel, so that a region on the handle bar panel does not need to be occupied to dispose the indicator, thereby improving space utilization. The following continues to describe the solution with reference to the accompanying drawings.

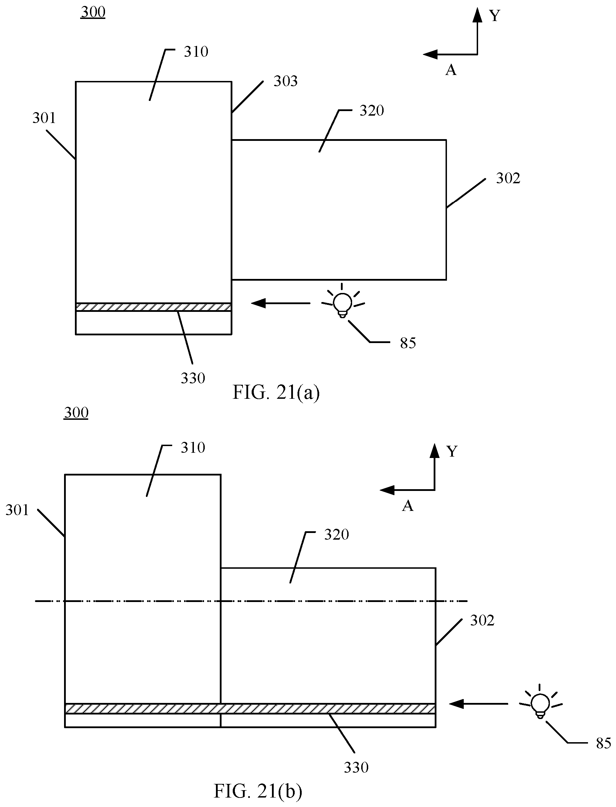

FIG. 21(a) and FIG. 21(b) to FIG. 24 each are a schematic diagram of an optical module that includes a light guide channel according to an embodiment of this application. FIG. 21(a) and FIG. 21(b) each are a right view of an optical module that includes a light guide channel according to this application. As shown in FIG. 21(a) and FIG. 21(b), a light guide channel 330 is disposed in an optical module 300, the light guide channel 330 penetrates through the optical module 300 in a first direction A, and the first direction A is a direction of an electrical interface toward SC-type optical interfaces.

A first end opening of the light guide channel 330 is located on a front end surface 301 on which the SC-type optical interfaces are located. As shown in FIG. 21(a), a second end opening of the light guide channel 330 may be located on a rear end surface 307 of a first step part. Alternatively, as shown in FIG. 21(b), a second end opening of the light guide channel 330 may be located on a rear end surface 302 of the optical module 300. In other words, a shape of the optical module 300 is not limited in this embodiment of this application, and provided that the light guide channel 330 penetrates through the optical module 300 in the first direction A, implementation of the optical module 300 falls within the protection scope of the embodiments of this application.

A light source 85 may be disposed on a rear side of a second end of the light guide channel 330, so that light of the light source 85 is propagated to the front end surface 301 of the optical module 300 along the light guide channel 330. The light source 85 is configured to indicate a registration status of the optical interface, and the light source 85 may be disposed on a board 150.

Optionally, a light guide material may be disposed in the light guide channel 330, to help transmit light emitted by the light source 85.

It should be noted that the light guide channel 330 in this embodiment of this application is applicable to an optical module of any structure. For example, a quantity of optical interfaces included in a single optical module 300 or a type of the optical interface is not limited in an application of the light guide channel 330. For example, the optical module may include one or more optical interfaces, and the optical interface may be an SC-type optical interface, an LC-type optical interface, or another type of optical interface.

Optionally, one light guide channel 330 corresponds to one optical interface, and each light guide channel is used to indicate a registration status of a corresponding optical interface. For example, the optical module 300 may include a plurality of light guide channels 330, the plurality of light guide channels 330 are in a one-to-one correspondence with a plurality of optical interfaces, the plurality of light guide channels 330 are in a one-to-one correspondence with a plurality of light sources 85, and each light source 85 is used to indicate a registration status of one optical interface. Optionally, a specific position of the light source 85 is not limited in this embodiment of this application, provided that light emitted by the light source 85 can be propagated along the light guide channel 330.

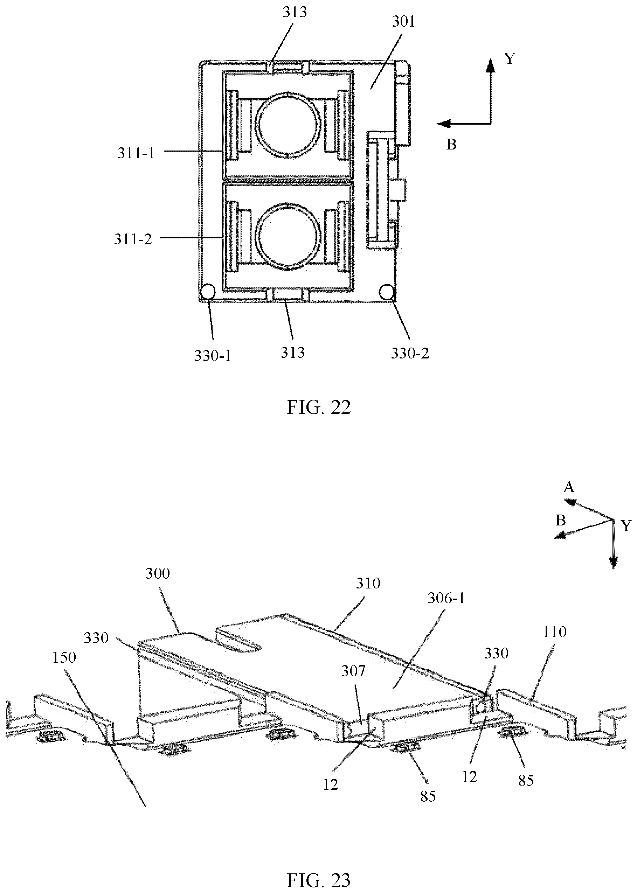

FIG. 22 is a front view of an optical module that includes a light guide channel according to an embodiment of this application. As shown in FIG. 22, first end openings of light guide channels (330-1, 330-2) are located on a front end surface 301 of the optical module. The optical module 300 includes two SC-type optical interfaces 311-1 and 311-2 and two light guide channels 330-1 and 330-2. The SC-type optical interface 311-1 may correspond to the light guide channel 330-1, and the SC-type optical interface 311-2 may correspond to the light guide channel 330-2.

Optionally, a specific position of the light guide channel 330 on the front end surface 301 of the optical module 300 is not limited in this embodiment of this application. For example, the first end opening of the light guide channel 330 may be located on a left side or a right side of the optical interface (311), or may be located in a region other than the optical interface (311) on the front end surface 301.

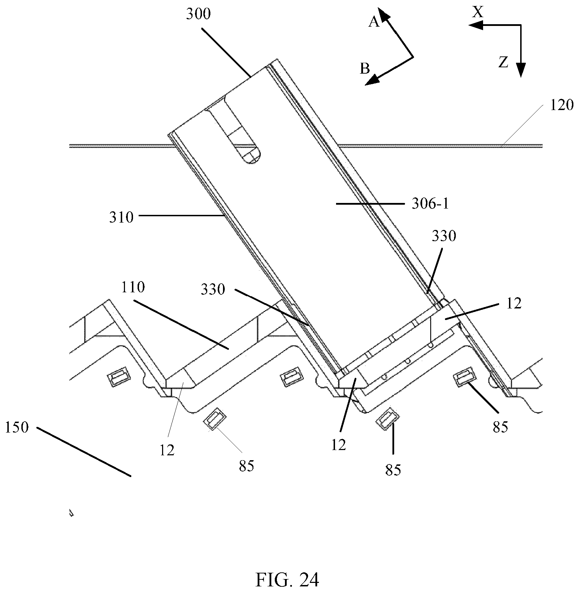

FIG. 23 is a schematic three-dimensional cross-sectional diagram of a board interface system according to an embodiment of this application. FIG. 24 is a top view of the board interface system shown in FIG. 23. As shown in FIG. 23 and FIG. 24, a light guide channel 330 penetrates through a first step part 310 of an optical module 300 in a first direction A, and a light source 85 is disposed on a back surface of a board 150 and is located on a rear side of a second end opening of the light guide channel 330, so that light of the light source 85 can pass through the light guide channel 330. Because a size of the first step part 310 of the optical module 300 is greater than a size of a second step part 320, a handle bar 110 extends backward (in the first direction A) along a structure of the first step part 310, and then extends downward (in a Y-axis direction) along a rear end surface 307 of the first step part 310 and is connected to the board 150. Therefore, the handle bar 110 is further disposed between the rear end surface 307 of the first step part 310 and the light source 85. To prevent light emitted by the light source 85 from being blocked by the handle bar 110, an opening 12 is further disposed on the handle bar 110, so that light emitted by the light source 85 can reach the light guide channel 330 by using the opening 12. It should be noted that, for ease of displaying a structure of the optical module 300, FIG. 23 and FIG. 24 each show only a cross-sectional structure of the handle bar 110.

It should be noted that FIG. 23 and FIG. 24 show only one specific manner of implementing the light guide channel 330 in this application, and do not constitute a limitation on the technical solution in this embodiment of this application. The light guide channel 330 may alternatively have another implementation or a variation, and the optical module 300 and the handle bar 110 are not limited to the structures shown in FIG. 23 and FIG. 24. For example, alternatively, the optical module 300 may be of a substantially rectangular parallelepiped structure. The light source 85 is not limited to being disposed on the back surface of the board 150, and may be alternatively disposed in another proper position, provided that light emitted by the light source 85 can be transmitted to a front end surface 301 of the optical module 300 along the light guide channel 330.

Optionally, as shown in FIG. 6, an optical module 300 further includes an unlocking apparatus 700, and the unlocking apparatus 700 is configured to unlock a connection between the optical module 300 and a cage 600. The unlocking apparatus 700 may be disposed on a bottom surface of the optical module 300, or unlocking apparatuses 700 may be disposed on both a left side surface and a right side surface 303 of the optical module 300. An unlocking manner of the unlocking apparatus 700 may include pull ring unlocking or pull belt unlocking. The pull ring unlocking is applicable to a structure in which the unlocking apparatus 700 is installed on the bottom surface of the optical module 300. In this unlocking manner, a pull ring drives a sliding block to push a cage latch to lift a tongue, to implement unlocking. The pull belt unlocking manner is applicable to a structure in which the unlocking apparatuses 700 are disposed on the two side surfaces of the optical module 300. In the unlocking manner, a pull belt is pulled to squeeze buckling points on two sides of the cage outward to disengage the buckling points from buckled points, to implement unlocking.

Optionally, an embodiment of this application further proposes an unlocking manner. In the unlocking manner, an unlocking apparatus 700 is disposed only on a first side surface of an optical module 300, and the first side surface is a right side surface 303 or a left side surface 304 of the optical module 300. The unlocking apparatus 700 first does not occupy space in a short side direction (namely, a Y-axis direction) of a handle bar 110. For a board interface system 100 in which two optical interfaces of an optical module 300 are distributed in a short side direction of a handle bar 110, occupied space on the handle bar 110 in the short side direction can be reduced. Further, because the unlocking apparatus 700 is disposed on only one side surface instead of two opposite side surfaces of the optical module 300, occupied space on the handle bar 110 in a long side direction (namely, an X-axis direction) can also be reduced, to help implement a board interface system with high-density optical interfaces, thereby improving space utilization.

Optionally, a specific structure of the unlocking apparatus 700 is not limited in this application. The unlocking apparatus may use a pull ring unlocking manner or a pull belt unlocking manner, or may use a push rod unlocking manner, or may use another type of unlocking manner.

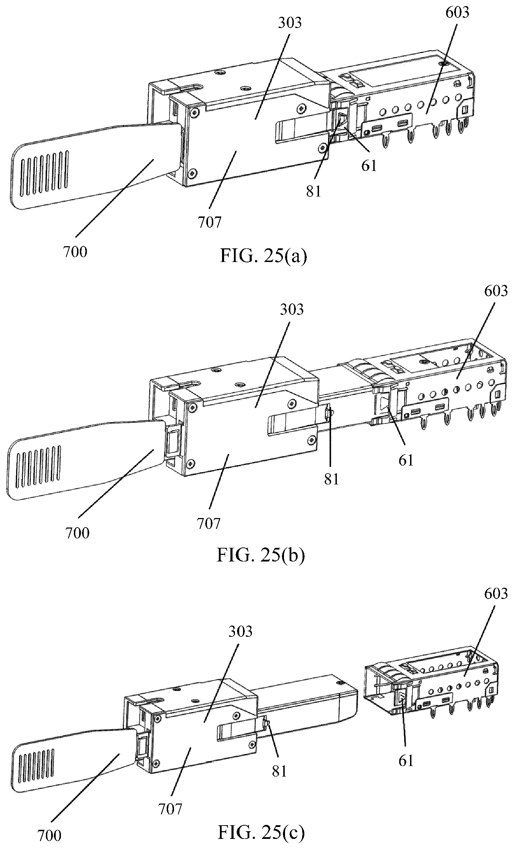

As an example, FIG. 25(a) to FIG. 25(c) each are a schematic structural diagram of a cage and an optical module that includes an unlocking apparatus according to an embodiment of this application. In FIG. 25(a) to FIG. 25(c) and subsequent accompanying drawings, a case in which an unlocking apparatus 700 is located on a right side surface 303 of an optical module 300 is used for description. A person skilled in the art may understand that the unlocking apparatus 700 may also be disposed on a left side surface 304 of the optical module 300, and a disposition manner thereof is similar. Details are not described herein.

FIG. 25(a) is a schematic diagram in which an optical module 300 and a cage 600 are in a locked state. FIG. 25(b) is a schematic diagram in which the optical module 300 and the cage 600 are in an unlocking process. FIG. 25(c) is a schematic diagram in which the optical module 300 is removed from the cage 600. As shown in FIG. 25(a) to FIG. 25(c), a hook 81 is disposed on a right side surface 303 of the optical module, and there is a tongue 61 at a corresponding position on a right side wall 603 of the cage 600. When the optical module 300 is inserted into the cage 600, the hook 81 is locked with the tongue 61. When the optical module 300 is removed from the cage 600, the tongue 61 is lifted outward, so that the hook 81 is disengaged from the tongue 61.

Optionally, a locking manner of the optical module 300 and the cage 600 is not limited to using the hook 81 and the tongue 61, or may be another locking manner. Alternatively, the optical module 300 may be locked with the cage 600 in another manner, for example, by using a buckling point and a buckled point. The locking manner used for the optical module 300 and the cage 600 is not limited in this embodiment of this application, provided that a locking function of the optical module 300 and the cage 600 can be implemented.

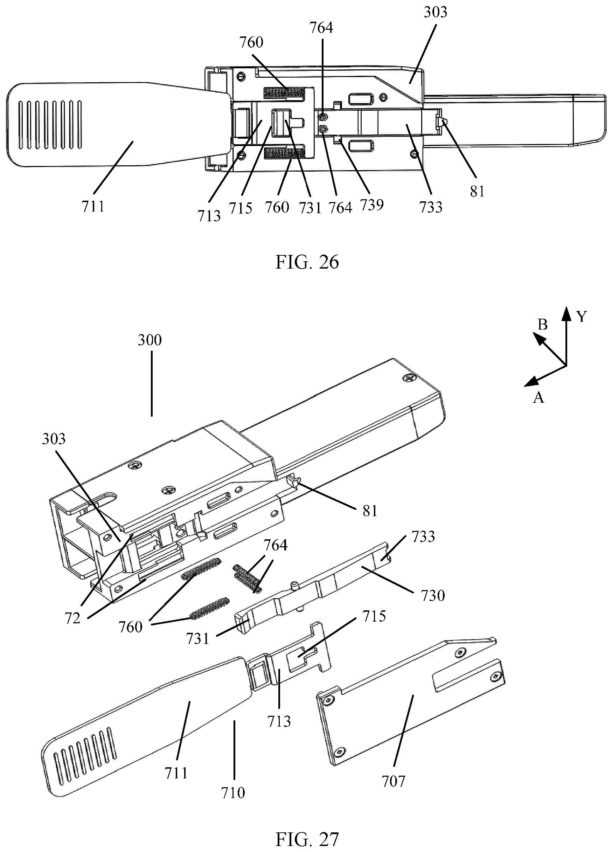

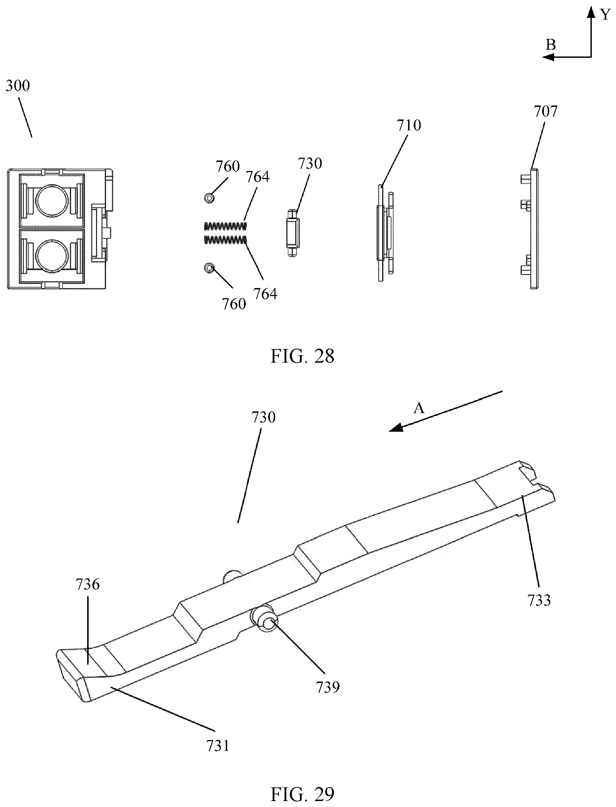

An unlocking apparatus 700 in FIG. 25(a) to FIG. 25(c) is covered by a housing 707, and an internal structure of the unlocking apparatus 700 is not completely displayed. FIG. 26 is a cutaway diagram of an optical module that includes an unlocking apparatus according to an embodiment of this application. FIG. 27 is a schematic exploded view of an optical module that includes an unlocking apparatus according to an embodiment of this application. FIG. 28 is a schematic front exploded view of an optical module that includes an unlocking apparatus according to an embodiment of this application. FIG. 29 is a schematic diagram of a lever assembly according to an embodiment of this application. The following continues to describe the unlocking apparatus 700 in this embodiment of this application with reference to the accompanying drawings.

As shown in FIG. 26 to FIG. 28, the unlocking apparatus 700 includes a handle assembly 710 and a lever assembly 730. The handle assembly 710 is configured to push/pull the optical module 300. A first end of the lever assembly 730 includes a stressed part 731, and an unlocking part 733 is disposed at a second end that is of the lever assembly 730 and that is away from the stressed part 731. When driving the optical module 300 to pull the optical module 300 outward (that is, pull the optical module away from the cage 600 in a first direction A), the handle assembly 710 pushes the stressed part 731 of the lever assembly 730 to move in a direction close to the right side surface 303 of the optical module 300, to enable the unlocking part 733 of the lever assembly 730 to move in a direction away from the right side surface 303, so that the unlocking part 733 lifts the tongue 61 of the cage 600 outward to disengage the tongue 61 of the cage 600 from the hook 81.

In the implementation, the lever assembly 730 may use a lever principle. When the handle assembly 710 is pulled outward in a direction away from the cage, the first end (the stressed part 731) of the lever assembly 730 is driven to move in a direction close to the optical module 300, to enable the second end (the unlocking part 733) of the lever assembly 730 to move in a direction away from the optical module 300, so that the second end of the lever assembly 730 lifts the tongue 61 of the cage 600 outward to disengage the tongue 61 of the cage 600 from the hook 81, to implement unlocking between the optical module 300 and the cage 600.

As shown in FIG. 29, the lever assembly 730 may include a fulcrum 739, one side of the fulcrum 739 is the stressed part 731, and the other side of the fulcrum 739 is the unlocking part 733. Optionally, the lever assembly 730 may also be referred to as an unlocking arm.

Specific structures of the handle assembly 710 and the lever assembly 730 are not limited in this embodiment of this application, and various variations can be made to the handle assembly 710 and the lever assembly 730 with respect to the structures shown in FIG. 25(a) to FIG. 25(c) to FIG. 29, provided that the foregoing function can be implemented.

Optionally, the handle assembly 710 includes a pull belt 711 and a pressing part 713, and the pull belt 711 is connected to the pressing part 713 through fastening. The pressing part 713 may include a hollow part 715, and the hollow part 715 is configured to accommodate the stressed part 731 of the lever assembly 730 when the pull belt 711 is stationary. The stressed part 731 includes a protruded inclined surface 736, and when the hollow part 715 overlaps with the inclined surface 736, the inclined surface 736 protrudes from a surface of the hollow part 715. As shown in FIG. 29, the inclined surface 736 is inclined upward in the first direction A. When the pull belt 711 drives the pressing part 713 to move in the direction away from the cage 600 (namely, the first direction A), the hollow part 715 also moves in the first direction A with the pressing part 713, the inclined surface 736 no longer matches the hollow part 715, and the pressing part 713 presses the inclined surface 736 of the stressed part 731, to enable the stressed part 731 to move in the direction toward the optical module 300, so that the unlocking part 733 moves in the direction away from the optical module 300, to push the tongue 61 of the cage 600 to lift the tongue 61 of the cage 600 outward to disengage the tongue 61 of the cage 600 from the hook 81, to implement unlocking between the optical module 300 and the cage 600.

The stressed part 731 includes the protruded inclined surface 736. In other words, a projection shape of the stressed part 731 of the lever assembly 730 on a plane on which a top surface 305 of the optical module 300 is located is a slope. When the pull belt 711 is stationary, the hollow part 715 of the pressing part 713 overlaps with a projection of the stressed part 731 on the right side surface 303 of the optical module.

Optionally, as shown in FIG. 26 and FIG. 27, the handle assembly 710 further includes a reset apparatus, and the reset apparatus is configured to reset the handle assembly 710. The reset apparatus may include a stroke spring 760, a spring groove 72 parallel to the first direction A is disposed on the right side surface 303 of the optical module 300, and the stroke spring 760 is disposed in the spring groove 72. A first end of the stroke spring 760 is connected to the pressing part 713 of the handle assembly 710, in other words, the first end of the stroke spring 760 is fastened to the pressing part 713. A second end of the stroke spring 760 is connected to the spring groove 72, in other words, the second end of the stroke spring 760 is fastened to one end of the spring groove 72. When the handle assembly 710 moves outward in the first direction A, the pressing part 713 drives the first end of the stroke spring 760 to also move in the first direction A, and the second end of the stroke spring 760 is fastened. In this case, the stroke spring 760 changes from a normal state to a compressed state and generates an elastic force in a third direction opposite to the first direction A. Therefore, when the handle assembly 710 stops moving in the first direction A, the elastic force generated by the stroke spring 760 is used to drive the pressing part 713 to move in the third direction opposite to the first direction A, to reset the handle assembly 710.

The reset apparatus in FIG. 26 to FIG. 28 includes two stroke springs 760. Optionally, a quantity of stroke springs 760 is not limited in this embodiment of this application, and there may be one or more stroke springs 760.

Optionally, a specific implementation of the reset apparatus is not limited in this embodiment of this application. The reset apparatus may be implemented by using various variations of the implementations in FIG. 26 to FIG. 28, or may be implemented by using another structure.

Optionally, as shown in FIG. 26 to FIG. 28, the lever assembly 730 further includes a set apparatus, and the set apparatus is configured to reset the lever assembly 730. The set apparatus includes a set spring 764, the set spring 764 is disposed between the right side surface 303 of the optical module 300 and the lever assembly 730, and the set spring 764 is configured to drive the stressed part 731 of the lever assembly 730 to move in the direction away from the right side surface 303 of the optical module, to reset the lever assembly 730.

Specifically, a first end of the set spring 764 may be connected to the right side surface 303, and a second end of the set spring 764 is connected to the stressed part 731 of the lever assembly 730. When the handle assembly 710 pulls the optical module 300 to move outward in the first direction A, the first end (the stressed part 731) of the lever assembly 730 moves in the direction close to the right side surface 303 of the optical module 300, and the set spring 764 changes from a normal state to a compressed state and generates an elastic force away from the right side surface 303 of the optical module 300. Therefore, when a force for moving in the first direction A is no longer applied to the handle assembly 710, the elastic force generated by the set spring 764 is used to drive the stressed part 731 to move in the direction away from the right side surface 303 of the optical module 300, to reset the lever assembly 730.

The set apparatus in FIG. 26 to FIG. 28 includes two set springs 764. Optionally, a quantity of set springs 764 is not limited in this embodiment of this application, and there may be one or more set springs 764.

Optionally, a specific implementation of the set apparatus is not limited in this embodiment of this application. The set apparatus may be implemented by using various variations of the implementations in FIG. 26 to FIG. 28, or may be implemented by using another structure.

As shown in FIG. 6, a board interface system 100 further includes a cage assembly, and the cage assembly includes a cage 600, a buckle 62, and a heat sink 63. A hollow heat dissipation port 611 is disposed on a top wall 601 of the cage 600, and the buckle 62 is configured to attach the heat sink 63 to the heat dissipation port 611 through fastening. When a shape of an optical module 300 is a long strip, the cage 600 is configured to accommodate the entire optical module 300. In this case, the cage 600 is relatively long (in a first direction A). For example, in a conventional technology, a common cage length is 47 millimeters (mm). When the optical module 300 includes a first step part 310 and a second step part 320, because a volume of the first step part 310 is relatively large, the cage 600 is configured to accommodate only the second step part 320 of the optical module 300. Because the second step part 320 is relatively short (in the first direction A), to match the second step part 320, the cage 600 is also relatively short (in the first direction A).

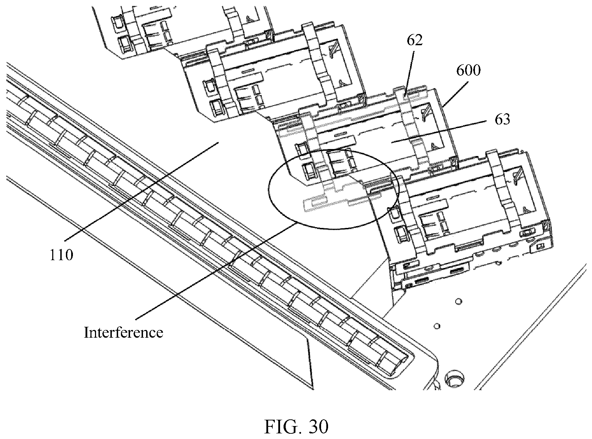

FIG. 30 is an interference diagram of a cage and a handle bar according to an embodiment of this application. As shown in FIG. 30, if a buckle 62 is relatively long, an end that is of the buckle 62 and that is close to a handle bar 110 interferes with the handle bar 110, that is, the buckle 62 cannot be normally buckled to a cage 600 due to being blocked by the handle bar 110. In this case, a length of the buckle may be reduced, to avoid interference with the handle bar 110. When the cage 600 is relatively long, even if the buckle 62 is shortened, a heat sink 63 can still be evenly stressed to be attached to a heat dissipation port 611, without affecting a heat dissipation effect. However, when the cage 600 is relatively short, if the buckle is shortened, the heat sink 63 may be tilted due to being unevenly stressed by the buckle.

To resolve the foregoing problem, an embodiment of this application proposes a cage assembly, including a cage 600 and a buckle 62, so that a heat sink 63 can still be evenly stressed when the cage is relatively short, to ensure a heat dissipation effect, and prevent the buckle 62 from interfering with a handle bar 110.

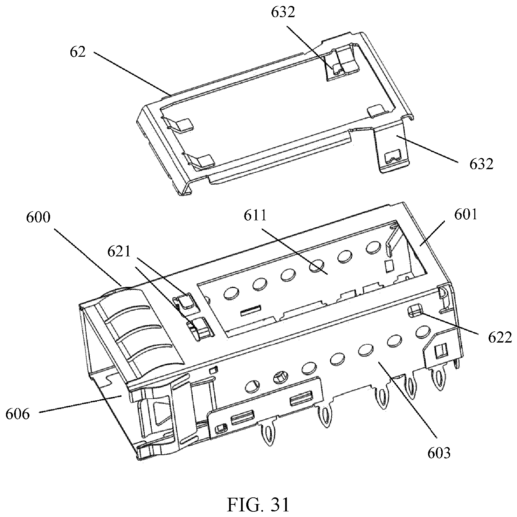

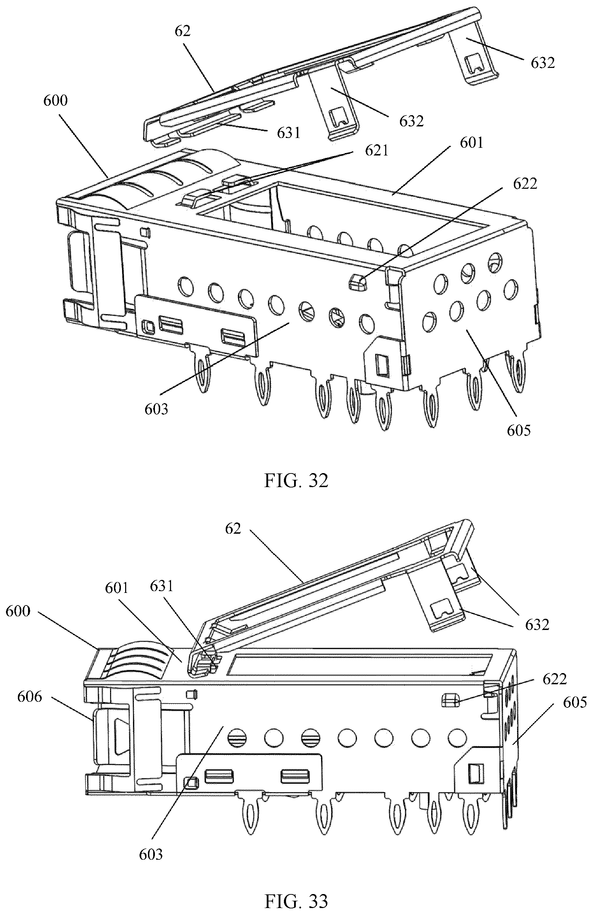

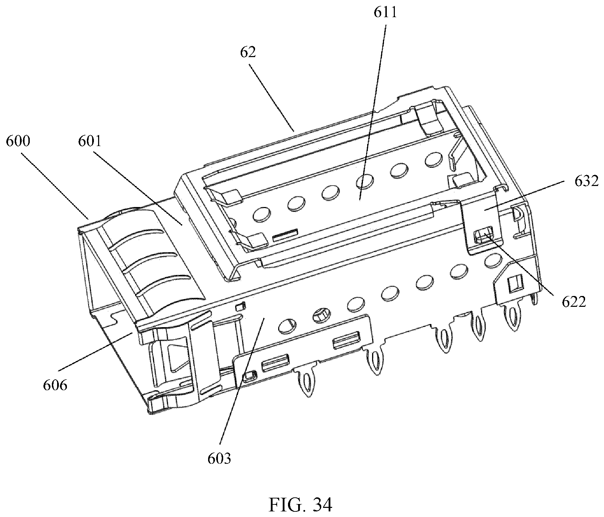

FIG. 31 to FIG. 34 each are a schematic structural diagram of a cage assembly according to an embodiment of this application. FIG. 31 and FIG. 32 each are a schematic diagram in which a cage 600 and a buckle 62 are in a separated state. FIG. 33 is a schematic diagram in which a cage 600 is buckled to one end of a buckle 62. FIG. 34 is a schematic diagram in which a cage 600 and a buckle 62 are in a buckled state.

As shown in FIG. 31 to FIG. 34, the cage 600 includes a top wall 601, a bottom wall, a right side wall 603, a left side wall, a rear wall 605, and a front end opening 606. The front end opening 606 is opposite to the rear wall, the top wall 601 is opposite to the bottom wall, and the right side wall 603 is opposite to the left side wall. An accommodating cavity is formed inside the cage 600, and an optical module 300 may enter the accommodating cavity of the cage 600 by using the front-end opening 606.

A hollow heat dissipation port 611 is disposed on the top wall 601 of the cage 600, two first buckling points 621 are disposed on the top wall 601 of the cage 600, and two second buckling points 622 are disposed on two side walls (the right side wall 603 and the left side wall) of the cage 600. The two first buckling points 621 are close to the front end opening 606 of the cage 600, and the two second buckling points 622 are close to the rear wall 605 of the cage 600.

The buckle 62 is configured to be buckled to the heat dissipation port 611 of the cage 600. Two first buckling parts 631 are disposed at a first end of the buckle, and the two first buckling parts 631 are configured to be buckled to the two first buckling points 621. Two second buckling parts 632 are disposed at a second end that is of the buckle and that is away from the first end, and the two second buckling parts 632 are configured to be buckled to the two second buckling points 622.

In some examples, a snap buckling manner, a press buckling manner, or another buckling manner may be used for the first buckling point 621 and the first buckling part 631 and for the second buckling point 622 and the second buckling part 632. This is not limited in this embodiment of this application. For example, in FIG. 31 to FIG. 34, the snap buckling manner is used for the first buckling point 621 and the first buckling part 631, and the press buckling manner is used for the second buckling point 622 and the second buckling part 632.

Optionally, a distribution manner of the first buckling points 621 on the top wall 601 and a distribution manner of the second buckling points 622 on the two side walls are not limited in this embodiment of this application. For example, the two first buckling points 621 may be symmetrically disposed on the top wall 601 of the cage 600, and the two second buckling points 622 may also be symmetrically distributed on the two side walls of the cage 600.

Optionally, specific structures of the first buckling point 621, the second buckling point 622, the first buckling part 631, and the second buckling part 632 are not limited to the structures shown in FIG. 31 to FIG. 34. For example, a specific size and a specific shape of the buckling point are not limited, provided that the first buckling point 621 and the first buckling part 631 can implement a buckling function and the second buckling point 622 and the second buckling part 632 can implement a buckling function.

Optionally, quantities of first buckling points 621, second buckling points 622, first buckling parts 631, and second buckling parts 632 are also not limited in this embodiment of this application. For example, only one first buckling point 621 may be disposed on the cage 600, and one corresponding first buckling part may be disposed on the buckle 62; or more first buckling points 621 and more first buckling parts 631 may be disposed. A quantity of first buckling points 621 may be equal or not equal to a quantity of first buckling parts 631. A quantity of second buckling points 622 may be equal or not equal to a quantity of second buckling parts 632. For example, as shown in FIG. 32, two first buckling points 621 may be disposed on the top wall 601 of the cage 600, one buckling part 631 is disposed on the buckle 62, and the first buckling part 631 may implement a buckling function with both the two first buckling points 621. For another example, more second buckling points 622 may be disposed on the two side surfaces (the right side surface 603 and the left side surface) of the cage 600, so that the cage 600 is more tightly buckled to the buckle 62.

In the cage assembly provided in this embodiment of this application, the first buckling point is disposed on the top wall of the cage, and the second buckling points are disposed on the two side walls of the cage, to increase a buckling span when the buckle is buckled to the cage, so that the heat sink 63 is evenly stressed, to prevent the heat sink 63 from being tilted. In addition, because the first buckling point close to the front end opening of the cage is disposed on the top wall of the cage, the buckle can be prevented from interfering with a handle bar.

A person of ordinary skill in the art may be aware that, in combination with the examples described in the embodiments disclosed in this specification, units and algorithm steps may be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical module (300), comprising:
two square connector SC-type optical interfaces (311), wherein the two SC-type optical interfaces (311) are located at a front end of the optical module (300); and
an electrical interface (32), wherein the electrical interface (32) is located at a rear end of the optical module, the optical module (300) **characterised in that** a light guide channel (330) is disposed in the optical module (300), the light guide channel (330) **is** configured to transmit light of a light source (85) disposed on a board (150) of a board interface system (100) and penetrates through the optical module (300) in a first direction, wherein the first direction is a direction **from** the electrical interface (32) toward the SC-type optical interfaces (311)..

2. The optical module (300) according to claim 1, wherein the light guide channel (330) comprises a light guide material.

3. The optical module (300) according to claim 1 or 2, wherein the optical module (300) comprises a first step part (310) and a second step part (320), the first step part (310) comprises the front end of the optical module (300), the second step part (320) comprises the rear end of the optical module (300), and a projection area of the first step part (310) on a front end surface of the optical module (300) is greater than a projection area of the second step part (320) on the front end surface of the optical module (300).

4. The optical module (300) according to any one of claims 1 to 3, wherein an unlocking apparatus (700) is disposed on an outer side of a first side surface of the optical module (300), the unlocking apparatus (700) is configured to unlock a connection between the optical module (300) and a cage (600), and the first side surface is a left side surface (304) or a right side surface (303) of the optical module (300).

5. The optical module (300) according to claim 4, wherein a hook (81) is disposed on the first side surface of the optical module (300), and when the optical module (300) is inserted into the cage (600), the hook (81) is locked with a tongue (61) on the cage (600).

6. The optical module (300) according to claim 5, wherein the unlocking apparatus (700) comprises a handle assembly (710) and a lever assembly (730), and when driving the optical module (300) to move in the first direction, the handle assembly (710) pushes a first end of the lever assembly (730) to move in a direction close to the first side surface of the optical module (300), to enable a second end of the lever assembly (730) to move in a direction away from the first side surface of the optical module (300), so that the second end of the lever assembly (730) lifts the tongue (61) of the cage (600) to disengage the tongue (61) of the cage (600) from the hook (81).

7. The optical module (300) according to claim 6, wherein the handle assembly (710) comprises a pull belt (711) and a pressing part (713), the pull belt (711) is connected to the pressing part (713), and the pressing part (713) is configured to push the first end of the lever assembly (730) to move in the direction close to the first side surface of the optical module (300).

8. The optical module (300) according to claim 7, wherein the pressing part (713) comprises a hollow part (715), the first end of the lever assembly (730) comprises a protruded inclined surface (736), and when the pull belt (711) is stationary, the hollow part (715) of the pressing part (713) is configured to accommodate the protruded inclined surface (736).

9. The optical module (300) according to any one of claims 6 to 8, wherein a spring groove (72) parallel to the first direction is disposed on the first side surface of the optical module (300), a stroke spring (760) is disposed in the spring groove (72), a first end of the stroke spring (760) is connected to the handle assembly (710), a second end of the stroke spring (760) is connected to the spring groove (72), and the stroke spring (760) is configured to drive the handle assembly (710) to move in a third direction opposite to the first direction, to reset the handle assembly (710).

10. The optical module (300) according to any one of claims 6 to 9, wherein a set spring (764) is disposed between the first side surface of the optical module (300) and the lever assembly (730), and the set spring (764) is configured to drive the first end of the lever assembly (730) to move in the direction away from the first side surface of the optical module (300), to reset the lever assembly (730).

11. A board interface system (100), comprising:
a plurality of optical modules (300) according to any one of claims 1 to 10; and
a handle bar (110), wherein the plurality of optical modules (300) are disposed on the handle bar (110) in a long side direction,
wherein the system further comprises a board (150), a light source (85) is disposed on the board (150), light emitted by the light source (85) passes through a light guide channel (330) of the optical module (300) in the first direction.

12. The system (100) according to claim 11, wherein a plurality of cages (600) are disposed on the handle bar (110) in the long side direction, and the plurality of cages (600) are configured to respectively place the plurality of optical modules (300).

13. The system (100) according to claim 11 or 12, wherein the system (100) further comprises a buckle (62), a hollow heat dissipation port (611) is disposed on a top wall (601) of the cage (600), and the buckle (62) is configured to be buckled to the heat dissipation port (611);
a first buckling point (621) is disposed on the top wall (601) of the cage (600), two second buckling points (622) are disposed on two side walls of the cage (600), the first buckling point (621) is close to a front end opening (606) of the cage (600), and the two second buckling points (622) are close to a rear wall (605) of the cage (600); and
a first buckling part (631) is disposed at a first end of the buckle (62), two second buckling parts (632) are disposed at a second end of the buckle (62), the first buckling part (631) is buckled to the first buckling point (621), and the two second buckling parts (632) are buckled to the two second buckling points (622).

## Patentansprüche

1. Optisches Modul (300), umfassend:
zwei optische Schnittstellen des SC-Typs mit quadratischem Steckverbinder (311), wobei sich die zwei optischen Schnittstellen des SC-Typs (311) an einem vorderen Ende des optischen Moduls (300) befinden; und
eine elektrische Schnittstelle (32), wobei sich die elektrische Schnittstelle (32) an einem hinteren Ende des optischen Moduls befindet, wobei das optische Modul (300) **dadurch gekennzeichnet ist, dass** ein Lichtleiterkanal (330) in dem optischen Modul (300) angeordnet ist, wobei der Lichtleiterkanal (330) konfiguriert ist zum Übertragen eines Lichts einer Lichtquelle (85), die auf einer Platine (150) eines Platinenschnittstellensystems (100) angeordnet ist, und das optische Modul (300) in einer ersten Richtung durchquert, wobei die erste Richtung eine Richtung von der elektrischen Schnittstelle (32) in Richtung auf die optischen Schnittstellen des SC-Typs (311) ist.

2. Optisches Modul (300) nach Anspruch 1, wobei der Lichtleiterkanal (330) ein Lichtleitermaterial umfasst.

3. Optisches Modul (300) nach Anspruch 1 oder 2, wobei das optische Modul (300) einen ersten abgestuften Abschnitt (310) und einen zweiten abgestuften Abschnitt (320) umfasst, wobei der erste abgestufte Abschnitt (310) das vordere Ende des optischen Moduls (300) umfasst, der zweite abgestufte Abschnitt (320) das hintere Ende des optischen Moduls (300) umfasst, und eine Projektionsfläche des ersten abgestuften Abschnitts (310) auf eine Vorderseite des optischen Moduls (300) größer als eine Projektionsfläche des zweiten abgestuften Abschnitts (320) auf die Vorderseite des optischen Moduls (300) ist.

4. Optisches Modul (300) nach einem der Ansprüche 1 bis 3, wobei eine Entriegelungseinrichtung (700) auf einer Außenseite einer ersten Seitenfläche des optischen Moduls (300) angeordnet ist, wobei die Entriegelungseinrichtung (700) konfiguriert ist, um eine Verbindung zwischen dem optischen Modul (300) und einem Schutzgehäuse (600) zu entriegeln, und wobei die erste Seitenfläche eine linke Seitenfläche (304) oder eine rechte Seitenfläche (303) des optischen Moduls (300) ist.

5. Optisches Modul (300) nach Anspruch 4, wobei ein Haken (81) an der ersten Seitenfläche des optischen Moduls (300) angeordnet ist und wobei, wenn das optische Modul (300) in das Schutzgehäuse (600) eingesetzt wird, der Haken (81) mit einer Zunge (61) an dem Schutzgehäuse (600) verriegelt wird.

6. Optisches Modul (300) nach Anspruch 5, wobei die Entriegelungseinrichtung (700) eine Griffanordnung (710) und eine Hebelanordnung (730) umfasst und wobei, wenn das optische Modul (300) angetrieben wird, um sich in der ersten Richtung zu bewegen, die Griffanordnung (710) ein erstes Ende der Hebelanordnung (730) drückt, um sich in eine Richtung in der Nähe der ersten Seitenfläche des optischen Moduls (300) zu bewegen, um das zweite Ende der Hebelanordnung (730) zu aktivieren, um sich in einer Richtung weg von der ersten Seitenfläche des optischen Moduls (300) zu bewegen, sodass das zweite Ende der Hebelanordnung (730) die Zunge (61) des Schutzgehäuses (600) anhebt, um die Zunge (61) des Schutzgehäuses (600) von dem Haken (81) zu lösen.

7. Optisches Modul (300) nach Anspruch 6, wobei die Griffanordnung (710) einen Zuggurt (711) und einen Druckabschnitt (713) umfasst, wobei der Zuggurt (711) mit dem Druckabschnitt (713) verbunden ist und wobei der Druckabschnitt (713) konfiguriert ist zum Drücken des ersten Endes der Hebelanordnung (730), um sich in die Richtung in der Nähe der ersten Seitenfläche des optischen Moduls (300) zu bewegen.

8. Optisches Modul (300) nach Anspruch 7, wobei der Druckabschnitt (713) einen hohlen Anteil (715) umfasst, wobei das erste Ende der Hebelanordnung (730) eine vorspringende geneigte Oberfläche (736) umfasst und wobei, wenn der Zuggurt (711) stationär ist, der hohle Anteil (715) des Druckabschnitts (713) konfiguriert ist, um die vorspringende geneigte Oberfläche (736) aufzunehmen.

9. Optisches Modul (300) nach einem der Ansprüche 6 bis 8, wobei eine Federnut (72) parallel zu der ersten Richtung auf der ersten Seitenfläche des optischen Moduls (300) angeordnet ist, wobei eine Hubfeder (760) in der Federnut (72) angeordnet ist, wobei ein erstes Ende der Hubfeder (760) mit der Griffanordnung (710) verbunden ist, wobei ein zweites Ende der Hubfeder (760) mit der Federnut (72) verbunden ist, und wobei die Hubfeder (760) konfiguriert ist zum Antreiben der Griffanordnung (710), um sich in eine dritte Richtung entgegengesetzt zur ersten Richtung zu bewegen, um die Griffanordnung (710) zurückzusetzen.

10. Optisches Modul (300) nach einem der Ansprüche 6 bis 9, wobei eine Einstellfeder (764) zwischen der ersten Seitenfläche des optischen Moduls (300) und der Hebelanordnung (730) angeordnet ist und wobei die Einstellfeder (764) konfiguriert ist zum Antreiben des ersten Endes der Hebelanordnung (730), um sich in der Richtung weg von der ersten Seitenfläche des optischen Moduls (300) zu bewegen, um die Hebelanordnung (730) zurückzusetzen.

11. Platinenschnittstellensystem (100), umfassend:
eine Vielzahl von optischen Modulen (300) nach einem der Ansprüche 1 bis 10; und
eine Griffleiste (110), wobei die Vielzahl von optischen Modulen (300) an der Griffleiste (110) in einer Seitenlängsrichtung angeordnet sind,
wobei das System ferner eine Platine (150) umfasst, wobei auf der Platine (150) eine Lichtquelle (85) angeordnet ist, wobei ein Licht, das von der Lichtquelle (85) abgestrahlt wird, einen Lichtleiterkanal (330) des optischen Moduls (300) in der ersten Richtung durchquert.

12. System (100) nach Anspruch 11, wobei eine Vielzahl von Schutzgehäusen (600) an der Griffleiste (110) in der Seitenlängsrichtung angeordnet sind und wobei die Vielzahl von Schutzgehäusen (600) konfiguriert sind, um die Vielzahl von optischen Modulen (300) entsprechend zu platzieren.

13. System (100) nach Anspruch 11 oder 12, wobei das System (100) ferner einen Verschluss (62) umfasst, wobei an einer oberen Wand (601) des Schutzgehäuses (600) ein hohler Wärmeableitungsanschluss (611) angeordnet ist und wobei der Verschluss (62) konfiguriert ist, um zu dem Wärmeableitungsanschluss (611) gekrümmt zu werden;
wobei ein erster Krümmungspunkt (621) an der oberen Wand (601) des Schutzgehäuses (600) angeordnet ist, wobei zwei zweite Krümmungspunkte (622) an zwei Seitenwänden des Schutzgehäuses (600) angeordnet sind, wobei sich der erste Krümmungspunkt (621) in der Nähe einer vorderen Endöffnung (606) des Schutzgehäuses (600) befindet und wobei sich die beiden zweiten Krümmungspunkte (622) in der Nähe einer Rückwand (605) des Schutzgehäuses (600) befinden; und
wobei an einem ersten Ende des Verschlusses (62) ein erster Krümmungsabschnitt (631) angeordnet ist, wobei an einem zweiten Ende des Verschlusses (62) zwei zweite Krümmungsabschnitte (632) angeordnet sind, wobei der erste Krümmungsabschnitt (631) zu dem ersten Krümmungspunkt (621) gekrümmt ist und wobei die beiden zweiten Krümmungsabschnitte (632) zu den beiden zweiten Krümmungspunkten (622) gekrümmt sind.

## Revendications

1. Module optique (300), comprenant :
deux interfaces optiques de type à connecteur carré SC (311), les deux interfaces optiques de type SC (311) étant situées à une extrémité avant du module optique (300) ; et
une interface électrique (32), l'interface électrique (32) étant située à une extrémité arrière du module optique, le module optique (300) étant **caractérisé en ce qu'**un canal de guidage de lumière (330) est disposé dans le module optique (300), le canal de guidage de lumière (330) étant configuré pour transmettre de la lumière d'une source lumineuse (85) disposée sur une carte (150) d'un système d'interface à carte (100) et pénétrant à travers le module optique (300) dans une première direction, la première direction étant une direction allant de l'interface électrique (32) vers les interfaces optiques de type SC (311).

2. Module optique (300) selon la revendication 1, dans lequel le canal de guidage de lumière (330) comprend un matériau de guidage de lumière.

3. Module optique (300) selon la revendication 1 ou 2, dans lequel le module optique (300) comprend une première partie de marche (310) et une seconde partie de marche (320), la première partie de marche (310) constituant l'extrémité avant du module optique (300), la seconde partie de marche (320) constituant l'extrémité arrière du module optique (300), et une zone de projection de la première partie de marche (310) sur une surface d'extrémité avant du module optique (300) étant plus grande qu'une zone de projection de la seconde partie de marche (320) sur la surface d'extrémité avant du module optique (300).

4. Module optique (300) selon l'une quelconque des revendications 1 à 3, dans lequel un appareil de déverrouillage (700) est disposé sur un côté extérieur d'une première surface latérale du module optique (300), l'appareil de déverrouillage (700) étant configuré pour déverrouiller une connexion entre le module optique (300) et une cage (600), et la première surface latérale étant une surface latérale gauche (304) ou une surface latérale droite (303) du module optique (300).

5. Module optique (300) selon la revendication 4, dans lequel un crochet (81) est disposé sur la première surface latérale du module optique (300), et lorsque le module optique (300) est inséré dans la cage (600), le crochet (81) est verrouillé avec une languette (61) sur la cage (600).

6. Module optique (300) selon la revendication 5, dans lequel l'appareil de déverrouillage (700) comprend un ensemble de poignée (710) et un ensemble de levier (730), et lors de l'entraînement du module optique (300) pour qu'il se déplace dans la première direction, l'ensemble de poignée (710) pousse une première extrémité de l'ensemble de levier (730) pour qu'il se déplace dans une direction se rapprochant de la première surface latérale du module optique (300), pour permettre à une seconde extrémité de l'ensemble levier (730) de se déplacer dans une direction s'éloignant de la première surface latérale du module optique (300), de sorte que la seconde extrémité de l'ensemble de levier (730) soulève la languette (61) de la cage (600) pour dégager la languette (61) de la cage (600) d'avec le crochet (81).

7. Module optique (300) selon la revendication 6, dans lequel l'ensemble de poignée (710) comprend une courroie de traction (711) et une partie de pression (713), la courroie de traction (711) étant connectée à la partie de pression (713), et la partie de pression (713) étant configurée pour pousser la première extrémité de l'ensemble de levier (730) afin qu'il se déplace dans la direction se rapprochant de la première surface latérale du module optique (300).

8. Module optique (300) selon la revendication 7, dans lequel la partie de pression (713) comprend une partie creuse (715), la première extrémité de l'ensemble de levier (730) comprend une surface inclinée en saillie (736), et lorsque la courroie de traction (711) est fixe, la partie creuse (715) de la partie de pression (713) est configurée pour recevoir la surface inclinée en saillie (736).

9. Module optique (300) selon l'une quelconque des revendications 6 à 8, dans lequel une rainure de ressort (72) parallèle à la première direction est disposée sur la première surface latérale du module optique (300), un ressort de course (760) est disposé dans la rainure de ressort (72), une première extrémité du ressort de course (760) est connectée à l'ensemble de poignée (710), une seconde extrémité du ressort de course (760) est connectée à la rainure de ressort (72), et le ressort de course (760) est configuré pour entraîner l'ensemble de poignée (710) afin qu'il se déplace dans une troisième direction opposée à la première direction, afin de réinitialiser l'ensemble de poignée (710).

10. Module optique (300) selon l'une quelconque des revendications 6 à 9, dans lequel un ressort de réglage (764) est disposé entre la première surface latérale du module optique (300) et l'ensemble de levier (730), et le ressort de réglage (764) est configuré pour entraîner la première extrémité de l'ensemble de levier (730) pour se déplacer dans la direction s'éloignant de la première surface latérale du module optique (300), pour réinitialiser l'ensemble de levier (730).

11. Système d'interface à carte (100), comprenant :
une pluralité de modules optiques (300) selon l'une quelconque des revendications 1 à 10 ; et
une barre de poignée (110), la pluralité de modules optiques (300) étant disposés sur la barre de poignée (110) dans une direction de côté long,
le système comprenant en outre une carte (150), une source de lumière (85) étant disposée sur la carte (150), la lumière émise par la source de lumière (85) passant à travers un canal de guidage de lumière (330) du module optique (300) dans la première direction.

12. Système (100) selon la revendication 11, dans lequel une pluralité de cages (600) sont disposées sur la barre de poignée (110) dans la direction de côté long, et la pluralité de cages (600) sont configurées pour placer respectivement la pluralité de modules optiques (300).

13. Système (100) selon la revendication 11 ou 12, le système (100) comprenant en outre une attache (62), un orifice de dissipation de chaleur creux (611) étant disposé sur une paroi supérieure (601) de la cage (600), et l'attache (62) étant configurée pour être attachée à l'orifice de dissipation de chaleur (611) ;
un premier point d'attache (621) étant disposé sur la paroi supérieure (601) de la cage (600), deux seconds points d'attache (622) étant disposés sur deux parois latérales de la cage (600), le premier point d'attache (621) étant proche d'une ouverture d'extrémité avant (606) de la cage (600), et les deux seconds points d'attache (622) étant proches d'une paroi arrière (605) de la cage (600) ; et
une première partie d'attache (631) étant disposée à une première extrémité de l'attache (62), deux secondes parties d'attache (632) étant disposées à une seconde extrémité de l'attache (62), la première partie d'attache (631) étant attachée au premier point d'attache (621) et les deux secondes parties d'attache (632) étant attachées aux deux seconds points d'attache (622).
